(19) Europäisches Patentamt
European Patent Office
Office européen des brevets

(11) EP 0 699 520 B1

(12) **EUROPEAN PATENT SPECIFICATION**

(45) Date of publication and mention of the grant of the patent:
**02.01.2003 Bulletin 2003/01**

(51) Int Cl.[7]: **B32B 27/08**, A43B 13/20, F16F 9/04

(21) Application number: **95306102.5**

(22) Date of filing: **31.08.1995**

(54) **Gas inflated bladder for cushioning**

Gas-aufgeblasene Blase zum Polstern

Vessie gonflée pour amortissement

(84) Designated Contracting States:
**DE FR GB IT**

(30) Priority: **31.08.1994 US 299286**
**31.08.1994 US 299287**

(43) Date of publication of application:
**06.03.1996 Bulletin 1996/10**

(60) Divisional application:
**02002952.6 / 1 214 897**

(73) Proprietors:
- **NIKE INTERNATIONAL LTD**
  **Beaverton, Oregon 97005-6453 (US)**
- **TETRA PLASTICS INC.**
  **St. Charles, Missouri 63304 (US)**

(72) Inventors:
- **Mitchell, Paul H.**
  **Chesterfield, Missouri 63005 (US)**
- **Sell, James C., Jr.**
  **Battleground, West Virginia 98604 (US)**
- **Bonk, Henry W.**
  **Wallingford, Connecticut 06492 (US)**
- **Shepard, Erwin C.**
  **West Bloomfield, Michigan 48322 (US)**
- **Hartleroad, DeWayne R.**
  **Chesterfield, Missouri 63017 (US)**

(74) Representative: **Leeming, John Gerard**
**J.A. Kemp & Co.,**
**14 South Square,**
**Gray's Inn**
**London WC1R 5JJ (GB)**

(56) References cited:
**EP-A- 0 624 463**
**US-A- 4 219 945**
**US-A- 4 423 185**
**US-A- 4 890 822**

- **DATABASE WPI Week 8750, Derwent Publications Ltd., London, GB; AN 87-351326 & JP-A-62 253 428 (OKURA IND. KK) 5 November 1987**
- **DATABASE WPI Week 9108, Derwent Publications Ltd., London, GB; AN 91-054622 & JP-A-3 005 143 (KURARAY KK) 10 January 1991**
- **CHEMICAL ABSTRACTS, vol. 00, no. 2, 9 February 1983, Columbus, Ohio, US; abstract no. 123749, 'helium barrier plastics laminates' & JP-A-58 022 163 (KOBUNSHI OYO GIJUTSU KK) 9 February 1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 699 520 B1

Printed by Jouve, 75001 PARIS (FR)

## Description

The present invention relates to a sealed, captive gas-filled cushioning device comprising a flexible membrane which includes an elastomeric barrier material for selectively controlling the diffusion of inert gases while allowing controlled diffusion of gases normally contained in the atmosphere, with the cushioning device being particularly employed in footwear products.

It is known in the prior art that certain barrier membranes which are useful under relatively harsh environmental conditions, e.g. membranes used for pressure accumulators, should exhibit both flexibility and imperviousness. This allows effective transmission of pressures between compartments containing a liquid and compartments containing a gas, respectively, in such accumulators. Unfortunately, there is no single material known which exhibits an acceptable level for both of these properties.

Materials which exhibit acceptable flexibility (such as thermoplastic materials of the polyurethane family) tend to have an unacceptably low level of resistance to gas permeation which results in a loss of the entrapped gas through the material. In contrast, materials which exhibit an acceptable level of resistance to gas permeation tend to have an unacceptably low level of flexibility. Thus, they are not useful in an environment which required constant flexure.

In an attempt to address the problem of supplying a product which has the characteristics of both flexibility and imperviousness, U.S. Patent 5,036,110 discloses an resilient membrane and a hydro-pneumatic accumulator fitted with that membrane. The first material which provides for the required elasticity is selected from among the thermoplastic polyurethanes, block amide polyethers, flexible polyesters and mixtures of such materials. The second material is grafted onto or embedded into the body of the first material in an effort to provide the required resistance to gas permeation. This second material is noted as being selected from the group consisting of copolymers of ethylene and vinyl alcohol, polyamides, polyvinylidene chlorides and mixtures of such materials. One additional embodiment discloses a film of the second material arranged in a sandwich-like fashion between two layers of the first material. All of the embodiments in U.S. Patent No. 5,036,110 are manufactured using a bi-material injection press said to be commonly used in the industry of thermoplastics material formation. The perceived problems associated with the bi-material injection molding of the membrane as disclosed in U.S. Patent No. 5,036,110 include the inability to accurately position and control thicknesses of the various layers within the molded membrane and the inability of the bi-material injection molding process to adequately bond the various materials together to form a unitary wall for the membrane without either creating a graft copolymer, modifying the second material with additional co-monomers, or employing an adhesive or tie-layer.

US Patent No. 4,890,822 discloses a cylinder assembly in which a pressurised gas chamber is separated from an oil chamber by a bellows of an oil-resistant elastomer body and a plastic gas-barrier film. Due to its shape, the bellows can extend or contract. The bellows cannot be bent sharply or deformed in order to avoid cracking the material and losing mechanical strength. The bellows are described as manufactured by a conventional method. The type of interface between the layers is not described. The bellows material lacks resiliency.

Japanese Laid-Open Patent Application (Kokai) No. 62-253428 describes a vehicular multilayer tube in which a gas barrier resin is laminated onto the inner surface of a tube of thermoplastic polyurethane elastomer. When the gas barrier resin is ethylene-vinyl alcohol copolymer, then an EVA-based adhesive resin is interposed between the layers.

Laminated films for packaging have been disclosed in Japanese Laid-Open Patent Application (Kokai) No. 3-5143. The films are biaxially drawn so that they will shrink when heated. These compositions are not used as membranes for sealed, captive-gas inflated bladders.

Japanese Laid-Open Patent Application (Kokai) No. 58-22163 discloses a gas barrier laminate and airships or balloons formed from the laminate. The balloon laminates include a layer of materials such as Tedlar, Kevlar and Diawheel that are not elastic.

US Patent No. 4,423,185 adds a functionalised polyolefin polymer to a thermoplastic polyurethane layer in order to obtain adhesion of the polyurethane to other layers of film material.

Shoes, and particularly athletic shoes, can be described as including two major categories of components, namely a shoe upper and a sole. The general purpose of the shoe upper is to snugly and comfortably enclose the foot. Ideally, the shoe upper should be made from an attractive, highly durable, yet comfortable material or combination of materials. The sole, which also can be made from one or more durable materials, is primarily designed to provide traction, and to protect the wearer's feet and body during any use consistent with the design of the shoe. The considerable forces generated during uses such as athletic activities require that the sole of an athletic shoe provide enhanced protection and shock absorption for the feet, ankles and legs of the wearer. For example, impacts which occur during running activities can generate forces of up to two to three times body weight; certain other activities, e.g., playing basketball, have been known to generate forces of up to approximately 6-10 times an individual's body weight. Accordingly, many shoes and, more particularly, many athletic shoe soles are now provided with some type of resilient, shock-absorbent material or shock-absorbent components to cushion the user during strenuous athletic activity. Such

resilient, shock-absorbent materials or components have now commonly come to be referred to in the shoe manufacturing industry as the mid-sole.

More specifically, it has been a focus of the industry to seek a mid-sole design which achieves an effective impact response in which both adequate shock absorption and resiliency are appropriately taken into account. Such resilient, shock-absorbent materials or components could also be applied to the insole portion of the shoe, which is generally defined as the portion of the shoe upper directly underlining the plantar surface of the foot.

A specific focus in the shoe manufacturing industry has been to seek mid-sole or insert structure designs which are adapted to contain fluids, in either the liquid or gaseous state, or both. Examples of gas-filled structures which are utilized within the soles of shoes are shown in U.S. Patent Nos. 900,867 entitled "Cushion for Footwear" which issued October 13, 1908, to Miller; 1,069,001 entitled "Cushioned Sole and Heel for Shoes" which issued July 29, 1913, to Guy; 1,304,915 entitled "Pneumatic Insole" which issued May 27, 1919, to Spinney; 1,514,468 entitled "Arch Cushion" which issued November 4, 1924, to Schopf; 2,080,469 entitled "Pneumatic Foot Support" which issued May 18, 1937, to Gilbert; 2,645,865 entitled "Cushioning Insole for Shoes" which issued July 21, 1953, to Towne; 2,677,906 entitled "Cushioned Inner Sole for Shoes and Method of Making the Same" which issued May 11, 1954, to Reed; 4,183,156 entitled "Insole Construction for Articles of Footwear" which issued January 15, 1980, to Rudy; 4,219,945 entitled "Footwear" which issued September 2, 1980, also to Rudy; 4,722,131 entitled "Air Cushion Shoe Sole" which issued February 2, 1988, to Huang; and 4,864,738 entitled "Sole Construction for Footwear" which issued September 12, 1989, to Horovitz; all of which are incorporated herein by reference. As will be recognized by those skilled in the art, such gas filled structures (often referred to in the shoe manufacturing industry as "bladders") typically fall into two broad categories, namely (1) "permanently" inflated systems such as those disclosed in U.S. Patent Nos. 4,183,156 and 4,219,945 and (2) pump and valve adjustable systems as exemplified by U.S. Patent No. 4,722,131. By way of further example, athletic shoes of the type disclosed in U.S. Patent No. 4,182,156 which include "permanently" inflated bladders have been successfully sold under the trade mark "Air Sole" and other trademarks by Nike, Inc. of Beaverton, Oregon. To date, millions of pairs of athletic shoes of this type have been sold in the United States and throughout the world.

The permanently inflated bladders are typically constructed under methods using a flexible thermoplastic material which is inflated with a large molecule, low solubility coefficient gas otherwise referred to in the industry as a "super gas," such as $SF_6$. By way of example, U.S. Patent No. 4,340,626 entitled "Diffusion Pumping Apparatus Self-Inflating Device" which issued July 20, 1982, to Rudy, which is expressly incorporated herein by reference, discloses a pair of elastomeric, selectively permeable sheets of film which are formed into a bladder and thereafter inflated with a gas or mixture of gases to a prescribed pressure which preferably is above atmospheric pressure. Ideally, the gas or gases utilized have a relatively low diffusion rate through the selectively permeable bladder to the exterior environment while gases such as nitrogen, oxygen and argon (which are contained in the atmosphere and have a relatively high diffusion rate) are able to penetrate the bladder. This produces an increase in the total pressure within the bladder by the additive nature of the partial pressures of the nitrogen, oxygen and argon which diffuse into the bladder from the atmosphere and the partial pressures of the gas or gases contained initially injected into the bladder upon inflation. This concept of an almost total "one-way" addition of gases to enhance the total pressure of the bladder is now known in the art as "diffusion pumping."

In a diffusion pumping system, there is a period of time involved before a steady state of internal pressure is achieved. The period of time is related to the bladder material used and the choice of gas or gases contained in the bladder. For example, oxygen tends to diffuse into the bladder rather quickly with the effect being an increase in the internal pressure of approximately 2.5 psi. In contrast, over the course of a number of weeks nitrogen gas will gradually diffuse into the bladder resulting in an increase of pressure to approximately 12.0 psi. This gradual increase in bladder pressure typically causes an increase in tension in the skin, resulting in a volume increase due to stretching. This effect is commonly referred to in the industry as "tensile relaxation" or "creep." Thus, the initial selection of materials employed in the bladder and the choice of the captive gas or gas mixture utilized to initially inflate the bladder is critical to achieving a bladder which is essentially permanently inflated at a desired internal pressure and which therefore maintains a desired internal pressure over an extended period of time.

Prior to and shortly after the introduction of the Air Sole™ athletic shoes, many of the mid-sole bladders employed in the industry consisted of a single layer gas barrier type film made from polyvinylidene chloride based materials such as Saran® (which is a registered trademark of the Dow Chemical Co.). These materials which, by their nature are rigid plastics, are less than ideal from the standpoint of flex fatigue, heat sealability, elasticity, and degradation. Attempts to address these limitations by creating bladder films made by techniques such as laminations and coatings (which involve one or more barrier materials in combination with a flexible bladder material such as various thermoplastics) then present a wide variety of problems typical of such combinations. Such difficulties with composite constructions typically include layer separation; peeling; gas diffusion or capillary action at weld interfaces; low elongation which leads to wrinkling of the inflated product; cloudy appearing finished bladders; reduced puncture resistance and tear strength; resistance to formation via blow-molding and/or heat-sealing and/or R-F welding; high cost processing; and difficulty with foam encapsulation and adhesive bonding; among others.

The art has attempted to address these problems (created by trying to laminate two or more dissimilar materials to balance the advantages and disadvantages of any single material) by the use of tie-layers or adhesives between the layers in preparing laminates. The use of such tie layers or adhesives help solve some of the difficulties noted above but generally prevent regrinding and recycling of any waste materials created during product formation back into an usable product, and thus, also contribute to high cost of manufacturing and relative waste. These and other short comings of the prior art are described in more extensive detail in U.S. Patent Nos. 4,340,626; 4,936,029 and 5,042,176 which are hereby expressly incorporated by reference.

With the extensive commercial success of the products such as the Air Sole™ shoes, consumers have been able to enjoy a product with a long service life, superior shock absorbency and resiliency, reasonable cost, and inflation pressure stability, without having to resort to pumps and valves. Thus, in light of the significant commercial acceptance and success that has been achieved through the use of long life inflated gas filled bladders, it is highly desirable to develop advancements to solve the few remaining disadvantages associated with such products. The goal then is to provide flexible, "permanently" inflated, gas-filled shoe cushioning components which meet, and hopefully exceed, performance achieved by such products as the Air Sole™ athletic shoes offered by Nike, Inc.

One key area of potential advancements stems from a recognition that it would be desirable to employ "capture" or "captive" gases other than the large molecule, low solubility coefficient "super gases" as described in the '156, '945 and '738 patents, replacing them with less costly and possibly more environmentally friendly gases. For example, U.S. Patent Nos. 4,936,029 and 5,042,176 specifically discuss the methods of producing a flexible bladder film that essentially maintains permanent inflation through the use of nitrogen as the captive gas. As further described in U.S. Patent No. 4,906,502, also expressly incorporated herein by reference, many of the perceived problems discussed in the '029 and '176 patents are solved by the incorporation of mechanical barriers of crystalline material into the flexible film such as fabrics, filaments, scrims and meshes. Again, significant commercial success for footwear products using the technology described in '502 patent (marketed under the trademark Tensile Air™ by Nike, Inc.) has been achieved. The bladders utilized therein are typically comprised of a thermoplastic urethane laminated to a core fabric three-dimensional, double bar Raschel knit nylon fabric, having $SF_6$ as the captive gas contained therein. As discussed in the '502 patent, such bladder constructions have reduced permeability to $SF_6$, nitrogen and other captive gases.

Exemplary of an accepted method of measuring the relative permeance, permeability and diffusion of different film materials is set forth in the procedure designated as ASTM 1434V. According to ASTM 1434V, permeance, permeability and diffusion are measured by the following formulas:

Permeance

$$\frac{\text{(quantity of gas)}}{\text{(area)X(time)X(press. diff.)}} = \frac{\text{Permeance}}{\text{(GTR)/(press. diff.)}} = \frac{\text{cc.}}{\text{(sq.m)(24hr)(Pa)}}$$

Permeability

$$\frac{\text{(quantity of gas)X(film thick)}}{\text{(area)X(time)X(press. diff.)}} = \frac{\text{Permeability}}{\text{(GTR)X(film thick)/(press.diff.)}} = \frac{\text{(cc)(mil)}}{\text{(sq.m)(24hr)(Pa)}}$$

Diffusion

$$\frac{\text{(quantity of gas)}}{\text{(area) x (time)}} = \frac{\text{Gas Transmission Rate}}{\text{(GTR)}} = \frac{\text{cc}}{\text{(sq.m)(24hr)}}$$

By utilizing the above listed formulae, the gas transmission rate in combination with a constant pressure differential and the film's thickness, can be utilized to define the movement of gas under specific conditions. In this regard, the preferred gas transmission rate (GTR) for a bladder in an athletic shoe component which seeks to meet the rigorous demands of fatigue resistance imposed by heavy and repeated impacts has a gas transmission rate (GTR) value of less than about 10, more preferably less than about 7.5, still more preferably less than about 5., and still more

preferably, a (GTR) value of 2.0 or lower, preferably as measured by the above procedure.

In addition to the aforementioned, the '029 and '176 patents also discuss problems encountered with previous attempts to use co-laminated combinations of plastic materials at least one of which is selected to operate as a barrier to oxygen. In this regard, the principal concern was the lack of fatigue resistance of the barrier layer. As described in the '176 patent, a satisfactory co-lamination of polyvinylidene chloride (such as Saran®) and a urethane elastomer would require an intermediate bonding agent. Under such a construction, relatively complicated and expensive processing controls would be required, such as strict time-temperature relationships and the use of heated platens and pressures, coupled with a cold press to freeze the materials together under pressure. Additionally, using adhesive tie layers or incorporating crystalline components into the flexible film at high enough levels to accomplish a gas transmission rate of 10 or less, dramatically reduces the flexibility of the film.

The primary aim of the present invention is to provide a sealed, captive gas-filled bladder suitable for use cushioning comprising an multi-layered membrane which has (1) a desirable level of flexibility (or rigidity); (2) a desirable level of resistance to degradation caused by moisture and (3) an acceptable level of imperviousness to fluids which can be in the form of gases, liquids or both, depending mainly on the intended use of the product, while overcoming the problems associated with the prior art. The flexibility and resistance to degradation caused by moisture are obtained by using a thermoplastic polyurethane, while the imperviousness to media such as liquids and/or gases is obtained by using an intermediate layer or a layer generally not exposed to the atmosphere of barrier material comprising a copolymer of ethylene and vinyl alcohol, for example.

This aim can be achieved by using a multi-layer process such as co-extrusion blow moulding or coextrusion of sheet, film, tubing or profile, for example which incorporates a separate material flow channel for each material. Typically, first and second extrusion channels for the flexible material (i.e. the thermoplastic polyurethane) are located on either side of the extrusion channel for the barrier material (i.e. the copolymer of ethylene and vinyl alcohol).

The membrane may be manufactured by laminating the thermoplastic polyurethane and the main barrier material by bringing the selected materials into contact at a temperature of approximately 149°C to 232°C (300°F to 450°F). The lamination within the scope of the present invention can be carried out under a variety of plastic forming techniques to create a bond between the two differing materials over substantially the entire intended contact surface of the two differing materials according to the following reaction, when a copolymer of ethylene and vinyl alcohol is employed at least in part as the barrier material;

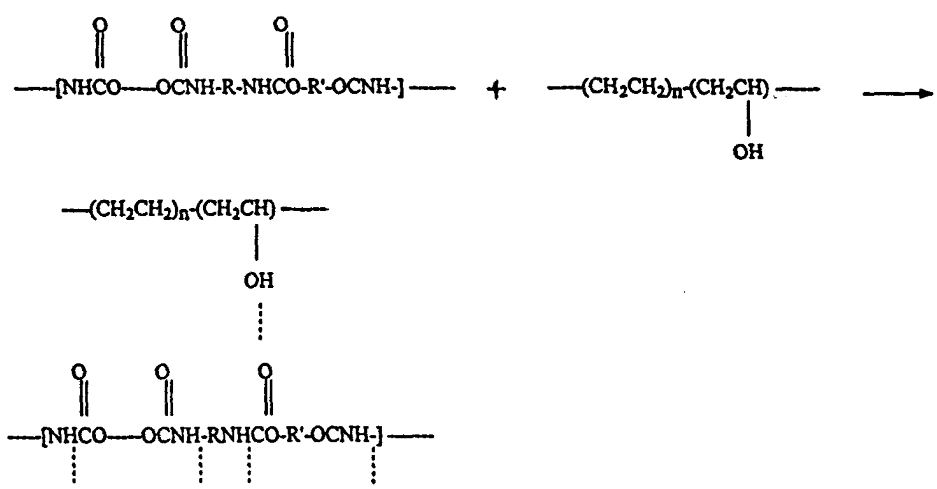

where R is

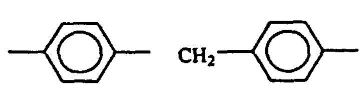

and R' is a short chain diol such as $(CH_2)_4$

According to a first exemplary embodiment, the membrane consists of an inner layer of the main barrier material having an average thickness between approximately 10 microns to about 500 microns bonded between a first outer layer and a second outer layer, both outer layers being formed from a material including or consisting essentially of a prepolymeric thermoplastic polyurethane film. The first and second layers of laminate typically have a thickness

of at least 0.01 millimeters (mm) for applications such as hydraulic accumulators. It is contemplated that material thicknesses less than 0.01 mm can be employed for other applications such as films used in the food packaging industry. The laminating process of the present invention controls the relative position of the laminates, as well as (in theory) providing for the surface bonding between the laminates. Accordingly, adhesives (or tie-layers as they are often called in the thermoplastic forming industry) are not required or desirable.

According to a second exemplary embodiment, the membrane consists of an inner layer comprising a main barrier material having a thickness between approximately 10 microns to about 500 microns which is surface bonded in accordance with the above listed reaction on one side to at least one outer layer of the thermoplastic polyurethane. Again, the contact resulting from the lamination process of the present invention provides for strong surface bonding between the layers, thereby eliminating the need for adhesive tie-layers. According to still other exemplary embodiments, membranes consisting of multiple layers (i.e. at least five) including alternating layers of thermoplastic urethanes and main barrier materials are disclosed.

Still other advantages and objects of the present invention will become apparent to those skilled in the art from the subsequent detailed description, appended claims and drawings.

The present invention also relates to the processes and methods for preparing the laminated resilient barrier membranes and forming them into bladders, as well as bladders comprising the membranes so made.

An important application of embodiments of the present invention is to provide an inflatable cushioning device that is essentially permanently inflated with nitrogen or another environmentally desirable gas or combination of gases which meet the goals of flexibility, durability and low cost.

It is another aim of such embodiments to provide a cushioning device having a permeable barrier material with a gas transmission rate value of 10 or less.

It is still another aim of such embodiments to provide a cushioning device which substantially resists peeling between layers, is relatively transparent and economical to manufacture.

It is yet another aim of such embodiments to provide a cushioning device where the barrier layer substantially resists delamination and does not require a tie layer between the barrier layer and the flexible layers.

It is a further aim of such embodiments to provide a cushioning device which is formable utilising the various techniques including, but not limited to, blow-moulding, tube and sheet extrusion, vacuum-forming, heat sealing and RF welding.

It is an additional aim of such embodiments to provide a cushioning device which prevents gas from escaping along interfaces between the materials via capillary action.

It is yet another aim of such embodiments to provide a cushioning device which allows for normal footwear processing such as encapsulating the cushioning device in a formable material.

The above list is not intended to be exhaustive of the objects or advantages of the present invention.

Such embodiments of the present invention therefore provide a cushioning device which features one or more novel gas-filled membranes with both the desired physical properties of thermoplastic elastomeric film and with improved barrier properties for retaining nitrogen gas and other captive gases. The gas-filled membranes are formulated so as to selectively control the rate of outward diffusion of certain captive gases (e.g. nitrogen and super gases) though the membranes as well enable diffusion pumping of externally mobile gases (e.g. argon, oxygen, carbon dioxide and other gases which are present in ambient air), into the gas-filled membranes.

The gas-filled membranes are preferably constructed of at least two flexible materials which together act as a barrier, and which are preferably elastomeric and polar in nature and capable of forming products having a variety of geometrics. Ideally, the flexible barrier materials utilized in accordance with the teachings of the present invention should contain the captive gas within an interior compartment of the gas-filled membrane for a relatively long period of time. In a highly preferred embodiment, for example, the gas-filled membrane should not lose more than about 20% of the initial inflated gas pressure over a period of two years. In other words, products inflated initially to a steady state pressure of between 137.9 to 151.7 kPa (20.0 to 22.0 psi) should retain pressure in the range of about 16.0 to 18.0 psi after a period of about two years.

Additionally, the barrier materials utilized should be flexible, relatively soft and compliant and should be highly resistant to fatigue and be capable of being welded to form effective seals typically achieved by RF welding or heat sealing. The barrier material should also have the ability to withstand high cycle loads without failure, especially when the barrier material utilized has a thickness of between about 5 mils to about 50 mils. Another important characteristic of the membranes of the present invention is that they should be processable into various shapes by techniques used in high volume production. Among these desirable techniques known in the art are blow molding, injection molding, vacuum molding, rotary molding, transfer molding and pressure forming. The membranes of the present invention should be preferably formable by extrusion techniques, such as tubing or sheet extrusion, including extrusion blow molding particularly at sufficiently high temperatures to attain the desired "adhesive" or "chemical" bonding as will be described in greater detail below without the use of a separate adhesive or tie-layer. These aforementioned processes should give rise to products whose cross-sectional dimensions can be varied.

As mentioned above, a significant feature of the membranes of the present invention is the controlled diffusion of mobile gases through the barrier layer and retention of captive gases therein. By the present invention, not only are the super gases usable as captive gases, but nitrogen gas may also be used as a captive gas due to the improved performance of the barrier. The primary mobile gas is oxygen, which diffuses relatively quickly through the barrier, and the other mobile gases may be any of the gases normally present in air except nitrogen. The practical effect of providing a barrier material for which nitrogen gas is suitable as a captive gas is significant.

For example, the membrane may be initially inflated with nitrogen gas or a mixture of nitrogen gas and one or more super gases or with air. If filled with nitrogen or a mixture of nitrogen and one or more super gases, an increment of pressure increase results from the relatively rapid diffusion of oxygen gas into the membrane, since the captive gas is essentially retained within the membrane. This effectively amounts to an increase in pressure of not greater than about 17.2 kPa (2.5 psi) over the initial inflation pressure and results in a relatively modest volume growth of the membrane of between 1 to 5%, depending on the initial pressure. However, if air is used as the inflatant gas, oxygen tends to diffuse out of the membrane while the nitrogen is retained as the captive gas. In this instance, the diffusion of oxygen out of the membrane and the retention of the captive gas results in an incremental decrease of the steady state pressure over the initial inflation pressure.

The features and advantages of the present invention will be more apparent from a consideration of the following description of exemplary embodiments and the accompanying drawings, in which:-

Figure 1 is a cross-sectional view of a first exemplary laminated membrane embodiment according to the present invention;

Figure 2 is a cross-sectional view of a second exemplary laminated membrane embodiment according to the present invention;

Figure 3 is a cross-sectional view of a third exemplary laminated membrane embodiment according to the present invention.

Figure 4 is a cross-sectional view of a fourth exemplary laminated membrane embodiment according to the present invention;

Figure 5 is a cross-sectional view of a product formed from a laminated membrane according to the present invention;

Figure 6 is a cross-sectional view of a second product manufactured using a laminated membrane according to the present invention;

Figure 7 is a schematic view of a Fourier Transform Infrared Radiation (FTIR) spectrum of a first sample material;

Figure 8 is a schematic view of a Fourier Transform Infrared Radiation (FTIR) spectrum of a second sample material;

Figure 9 is a schematic view of a Fourier Transform Infrared Radiation (FTIR) spectrum of a third sample material;

Figure 10 is a schematic view of a Fourier Transform Infrared Radiation (FTIR) spectrum of a fourth sample material;

Figure 11 is a side elevation view of a sheet co-extrusion assembly;

Figure 12 is a cross-sectional view of the manifold portion of the sheet co-extrusion assembly of Figure 12;

Figure 13 is a side elevation view of a tubing co-extrusion assembly;

Figure 14 is a side elevational view of an athletic shoe incorporating an embodiment of the present invention with a portion of the mid-sole cut away to expose a cross-sectional view;

Figure 15 is a bottom elevational view of the athletic shoe of Figure 14 with a portion cut away to expose another cross-sectional view;

Figure 16 is a section taken along line 3-3 of Figure 14;

Figure 17 is a fragmentary side perspective view of one embodiment of a tubular-shaped, two-layer cushioning device in accordance with the present invention;

Figure 18 is a sectional view taken along line 5-5 of Figure 17;

Figure 19 is a fragmentary side perspective view of a second embodiment of a tubular-shaped, three-layer cushioning device in accordance with the present invention;

Figure 20 is a sectional side view taken along line 7-7 of Figure 19;

Figure 21 is a perspective view of an alternative membrane embodiment according to the present invention;

Figure 22 is a side view of the membrane illustrated in Figure 21;

Figure 23 is a perspective view of an alternative membrane embodiment according to the present invention;

Figure 24 is a side elevational view of an athletic shoe having an alternative membrane embodiment according to the present invention;

Figure 25 is a perspective view of the membrane illustrated in Figure 24;

Figure 26 is a top elevation view of the membrane illustrated in Figures 24 and 25;

Figure 27 is a side elevation view of an athletic shoe having another alternative membrane embodiment according to the present invention;

Figure 28 is a perspective view of the membrane illustrated in Figure 27;

Figure 29 is a top view of the membrane illustrated in Figures 27 and 28;

Figure 30 is a perspective view of an alternative membrane embodiment according to the present invention;

Figure 31 is a side view of the membrane illustrated in Figure 30; and

Figure 32 is a schematic view of a graph representing gas transmission rates for various materials.

Referring now to the drawings, in which like reference numerals designate like or corresponding parts throughout the several views, there is shown in Figure 1, a laminated, resilient and flexible membrane manufactured in accordance with the teachings of the present invention which is designated generally by the reference numeral 10. Laminated membrane 10 comprises a first outer layer 12, a second outer layer 14 and an intermediate layer 16. First outer layer 12 and the second outer layer 14 are formed from a material comprising thermoplastic polyurethane (otherwise referred to herein as TPU). Depending mainly upon the intended use of the final product formed utilising the membrane 10, the first and second layers can have an average thickness ranging from below 0.01 mm up to the limits dictated by processing. The intermediate layer 16 is formed from a barrier material including a copolymer of ethylene and vinyl alcohol (otherwise referred to herein as EVOH), and optionally a material selected from the group consisting of aliphatic and aromatic polyamides, polyvinylidene chloride, co-polymers of acrylonitride and methyl acrylate, polyesters, liquid crystal polymers, polyurethane based thermoplastics, and mixtures thereof. In a preferred embodiment, the barrier material employed will include a copolymer of ethylene and vinyl alcohol (EVOH) with an average thickness of between about 10 microns to about 500 microns. In yet a still more preferred embodiment, the barrier material will consist essentially of a copolymer of ethylene and vinyl alcohol, having an average ethylene content of about 27mol % to about 48 mol %.

The thermoplastic urethane utilized under the teachings of the present invention are generally commercially available products such as Pellethane™ (which is a trademarked product of the Dow Chemical Co. of Midland, MI) and Elastollan® (which is a registered trademark of the BASF Corporation) and Estane® (which is a registered trademark of the B.F. Goodrich Co.) all of which are either ester or ether based urethanes engineered to impart flexible qualities to products produced therewith. In addition to these commercially available thermoplastic urethanes, others including materials selected from the group consisting of polyesters, polyethers, polycaprolactones, polyoxypropylenes and polycarbonates and mixtures thereof, can be employed.

The copolymers of ethylene and vinyl alcohol utilized under the teachings of the present invention are also preferably commercially available products such as EVAL® which is a registered trademark of the Eval Company of Elisle, Illinois and SOARNOL™ (which is a trademarked product available from the Nippon Gosei co., Ltd. [U.S.A.] of New York, N.Y.) both of which are engineered to have a relatively high resistance to degradation caused by moisture and to provide superior barrier properties for resistance to undesired gas permeation.

It is important to note that a variety of products can be formed which incorporate or employ the bladders disclosed herein including, without limitation, bladders useful for inflatable objects, such as footballs, basketballs, soccer balls and inner tubes; footwear; food packaging films; fuel lines; fuel storage tanks; and pressurized accumulators, among others.

Referring now to FIG. 2, a cross-sectional representation of a second exemplary embodiment of a membrane 10 according to the teachings of the present invention is shown. Under this exemplary embodiment, the membrane 10 includes a first layer 12 made from thermoplastic urethane and a second layer 16 made from a main barrier material including a copolymer of ethylene and vinyl alcohol and optionally material selected from the group consisting of co-polymers of ethylene and vinyl alcohol, aliphatic and aromatic polyamides, polyvinylidene chloride, co-polymers of acrylonitride and methyl acrylate, polyesters, liquid crystal polymers, polyurethane based thermoplastics, and mixtures thereof. The first layer 12 will typically have an average thickness of at least 0.01 millimeters and the second layer 16 have an average thickness of between about 10 microns to about 500 microns depending on the product produced as a result of laminating the first and second layers 12 and 16, respectively. As will be discussed in greater detail below, as used herein the term "laminated" is intended to mean contact in the form of primary hydrogen bonding occurring between the respective layers along extended lengths of the product. Thus, not only are the membrane embodiments of the present invention multi-layered, but they also are resistant to delamination which often occurs with products used under harsh environmental conditions.

It is important to note that the membrane 10, as illustrated in FIG. 2, can be utilized such that the first layer 12 is positioned as the inside layer and the second layer 16 is disposed on the outside of certain desired products.

Additionally, the first layer 12 can be disposed on the outside of the product with the second layer 16 being disposed on the inside. This arrangement would most likely be employed under situations where moisture may be in contact with the membrane, in view of the fact that the barrier material, and particularly copolymers of ethylene and vinyl alcohol are often susceptible to degradation caused by moisture in the surrounding atmosphere.

Referring to FIG. 3, a third exemplary membrane embodiment in accordance with the teachings of the present invention is shown. Under this embodiment, again a three layer laminate is contemplated comprising first and second layers 12 and 14, respectively, made from thermoplastic urethane and an intermediate layer 16 made from a barrier material including a copolymer of ethylene and vinyl alcohol, and optionally material selected from the group consisting of aliphatic and aromatic polyamides, polyvinylidene chloride, co-polymers of acrylonitride and methyl acrylate, polyesters, liquid crystal polymers, polyurethane based thermoplastics, and mixtures thereof. The membrane 10, as illustrated in FIG. 3, is essentially the same as that demonstrated in FIG. 1 except that the thickness of the three layers differ. For example, the first layer 12, which includes thermoplastic urethane, may have an average thickness below 0.01 millimeters while the second layer 14, which is also comprised of thermoplastic urethane, has an average thickness above 0.01 millimeters. Generally, enhanced thicknesses are desired under situations where the product, and more particularly, the thick layer is exposed to a harsh environment. In contrast, reduced thicknesses, namely those below an average of about 0.01 millimeters would be desirable where the layer of thermoplastic urethane is mainly used as a protective layer for the barrier layer 16. An intermediate barrier layer 16 is still employed therebetween regardless of the respective thicknesses of the first and second layers 12 and 14 thereby providing the benefits of selective resistance to gas permeation.

Referring to FIG. 4, a fourth exemplary membrane embodiment 10 is illustrated in accordance with the teachings of present invention. Under this embodiment, a five layer laminate, including three layers employing thermoplastic urethanes, (designated as reference numerals 12, 14 and 18) and two layers of a barrier material including copolymers of ethylene and vinyl alcohol, and optionally material selected from the group consisting of aliphatic and aromatic polyamides, polyvinylidene chloride, co-polymers of acrylonitride and methyl acrylate, polyesters, liquid crystal polymers, polyurethane based thermoplastics, and mixtures thereof (designated as reference numerals 16 and 20) is shown. Preferably, the two layers 16 and 20 of the barrier material are interspersed between the layers 12, 14 and 18 of thermoplastic urethane in a sandwiched construction.

By way of example, Figure 5 illustrates a product which can be manufactured using laminated membranes 10 of the three layer variety. The product is in the form of a bladder 24 designed to be used in a hydraulic accumulator which is used for vehicle suspension systems, vehicle brake systems, industrial hydraulic accumulators or for any accumulators having differential pressures between two potentially dissimilar fluid media. The bladder 24 separates the hydraulic accumulator into two chambers or compartments, one of which contains a gas such as nitrogen and the other one of which contains a liquid. Bladder 24 includes an annular collar 26 and a flexible partition 28. Annular collar 26 is adapted to be secured circumferentially to the interior surface of the spherical accumulator such that partition 28

divides the accumulator into two separate chambers. Flexible partition 28 moves generally diametrically within the spherical accumulator and its position at any given time is dependant upon the pressure of the gas on one side in conjunction with the pressure of the liquid on the opposite side.

By way of further example, Figure 6 illustrates a product manufactured using a combination of three layer membrane segments 30 such as those shown in the membranes 10 of Figures 1, 3 and 4 along with intermittent two layer segments 32 of thermoplastic urethane material. It may be desirable to utilize these so-called intermittent constructions under circumstances where the delamination potential along certain segments of a product are relatively high. One such location is along the annular collar 28 of bladder or diaphragm for hydraulic accumulators. Thus, it should be recognized that the membranes 10 described herein can include segments which do not include one or more layers of the ethylene vinyl alcohol copolymer.

Preferably, the thermoplastic polyurethane and ethylene vinyl alcohol are not modified in an effort to create cross-linking or conventional covalent bonding between the two layers; nor are any tie-layers or adhesive employed. The preferred compositions and methods of the present invention rely exclusively on the inherent properties of the thermoplastic urethane and copolymer of ethylene and vinyl alcohol when brought into contact according to the methods of the present invention, e.g., to maximize and rely primarily upon hydrogen bonding occurring between the respective layers.

To form the membranes 10 according to the teachings of the present invention, a number of different processes can be used, including but not limited to, coextrusion blow molding utilizing continuous extrusion, intermittent extrusion utilizing (1) reciprocating screw systems, (2) ram accumulator-type systems; (3) and accumulator head systems, coinjection stretch blow molding, or co-extruded sheet, blown film, tubing or profiles. It has been found that multi-layer processes such as tubing, sheet and film extrusion, as well as blow moulding utilizing co-extrusions give rise to products which appear to demonstrate the desired significant hydrogen bonding between the respective layers of thermoplastic urethane and the copolymers of ethylene and vinyl alcohol. For example, to form a product such as a hydraulic accumulator bladder or diaphragm via a multi-layer process such as blow molding,a product in accordance with the teachings of the present invention would typically be processed as follows utilizing any one of a number of commercially available blow molding machines such as a Bekum BM502 utilizing a co-extrusion head model no. BKB95-3B1 (not shown) or a Krup KEB-5 utilizing a model no. VW60/35 co-extrusion head (not shown).

Initially, the resinous materials (namely the thermoplastic urethanes and the barrier material such as copolymers of ethylene and vinyl alcohol) are first dried to the manufacturer's specification (if necessary) and fed into the extruder. Typically, the materials are fed into the extruders according to the order in which the layers are to be arranged, for example TPU in an outside extruder, EVOH in a middle extruder and TPU in inside extruder. The extruder heat profile is set for the best processing of the individual materials. However, it is suggested that no more than 11°C (20 °F) difference be present at the exit point of each extruder. As the material is forced forward in each extruder the heat profile is set to achieve the best molten mass. The heat profile would typically be set for between 149°C to 232°C (300 °F to about 450 °F) with the feed zone being the lowest set point and all other set points gradually increasing in increments of approximately 5.5°C (10 °F) until the desired melt is achieved. Once leaving the extruders a section of pipes or channels are sometimes used to direct the material to the multi-layered head (i.e. 3 or more heads ). It is at this point that any adjustments for differences in heat be addressed. The pumping action of the extruders not only forces the material into the individual head channels or flow paths but also determines the thickness of each layer. As an example, if the first extruder has a 60 mm diameter, the second has an extruder 35 mm diameter and the third extruder has a 35 mm diameter, the speed required to produce a 1.3 liter bladder or diaphragm requiring 2 mm for the outside layer of TPU, 3 mills for the EVOH layer and 2 mm for the inside layer of TPU produced under a desired cycle time of 26 seconds, then the first extruder would have a screw speed of about 10 rpm's, the second extruder would have a screw speed of about 5 rpm's and the third extruder would have a screw speed of about 30 rpm. Once entering the head channels or flow paths, the heat would normally be held constant or be decreased to adjust for the melt strength of the materials. The individual head channels or flow paths keep separate the molten masses while directing them downward and into the shape of a parison.

Just prior to entering the lower die or bushing and the lower mandrel, the material head channels or flow paths are brought together under the pressure created by the now unitary flow path surface area, the gap between the lower bushing and mandril and the pressure on the individual layers from the respective extruders. This pressure must be at least 1379 kPa (200 psi) and is normally, under the conditions described, in excess of 55 16 kPa (800 psi). At the point where the materials come together one parison is now formed that is a laminate made up of the three layers of thermoplastic urethane, copolymer of ethylene and vinyl alcohol and thermoplastic urethane, respectively, which are bonded together as described herein. The upper limit of the pressure is essentially only constrained by the physical strength of the head. After exiting the head, the laminate is closed on each end by the two mold halves and a gas such as air is injected into the mold forcing the laminated parison to blow up against the mold and be held in this fashion until sufficient cooling has taken place (i.e. approximately 16 seconds for the aforementioned sample), at which point the gas is exhausted. The part is then removed from the mold and further cooling is allowed for sufficient time to allow

for the part to be de-flashed or further processed as some parts may require. As should now be understood by those skilled in the art, the layers must be held separate until fully melted and preformed into a hollow tube at which time they are bonded as described under the heat and pressure described herein.

As those skilled in the plastic forming industry will recognize, the three major components of a blow molding machine, namely the extruders, die heads and mold clamps, come in a number of different sizes and arrangements to accommodate the consumer production rate schedule and size requirements.

A multi-layer process known as sheet co-extrusion involves an extrusion technique for the simultaneous extrusion of two or more polymers through a single die where the polymers are joined together such that they form distinct, well bonded layers forming a single extruded product. Typical layer structures are defined as follows:

A-B
: Two distinct layers consisting of two resins.

A-B-A
: Three distinct layers consisting of two or three resins.

A-B-A-B-A
: Five distinct layers consisting of two, three, four or five resins.

A-B-A
: When making a three layer sheet co-extrusion A-B-A consisting of two resins. (A-layer=TPU, B-layer=EVOH).

The equipment required to produce co-extruded sheet consists of one extruder for each type of resin which are connected to a co-extrusion feed block such as that shown in Figures 11 and 12, which are commercially available from a number of different sources including the Cloreon Company of Orange, Texas and Production Components, Inc. of Eau Claire, Wisconsin, among others. The co-extrusion feed block 50 consists of three sections. The first section 52 is the feed port section which connects to the individual extruders and ports the individual round streams of resin to the programming section 54. The programming section 54 then reforms each stream of resin into a rectangular shape the size of which is in proportion to the individual desired layer thickness. The transition section 56 combines the separate individual rectangular layers into one square port. The melt temperature of the TPU A layers should be between about 182°C (360 °F) to about 241°C (465 °F). To optimize adhesion between the TPU A layers and EVOH B layer, the actual temperature of each melt stream should be set such that the viscosities of each melt stream closely match. The combined laminar melt streams are then formed into a single rectangular extruded melt in the sheet die 58 which preferably has a "coat hanger" design as shown in Figure 12 which is now commonly used in the plastics forming industry. Thereafter the extrudate can be cooled utilizing rollers 60 forming a rigid sheet by either the casting or calendaring process.

The equipment required to produce co-extruded tubing consists of one extruder for each type of resin. Each extruder is connected to a common multi-manifolded tubing die. The polymer melt from each extruder enters a die manifold such as the one illustrated in Figure 13 which is commercially available from a number of different sources including Canterberry Engineering, Inc. of Atlanta, Georgia and Genca Corporation of Clearwater, Florida and flows in separate circular flow channels 72A and 72B for the thermoplastic urethane and the copolymer of ethylene and vinyl alcohol, respectively. The flow channels are then shaped into a circular annulus the size of which is proportional to the desired thickness for each layer. The individual melts are then combined to form one common melt stream just prior to the die entrance 74. The melt then flows through a channel 76 formed by the annulus between the outer surface 78 of a cylindrical mandrel 80 and the inner surface 82 of a cylindrical die shell 84. The tubular shaped extrudate exits the die shell and then can be cooled into the shape of a tube by many conventional pipe or tubing calibration methods. While a two component tube has been shown in Figure 13 it should be understood by those skilled in the art that additional layers can be added through separate flow channels.

Regardless of the plastic forming process used, it is of paramount importance that a consistent melt of the resinous thermoplastic urethane and ethylene vinyl alcohol are obtained to accomplish the desired extensive hydrogen bonding therebetween across the intended length or segment of the laminated product. Thus, the multi-layer processes utilized should be carried out at maintained temperatures of from about 300°F to about 450°F for the thermoplastic urethanes and the ethylene vinyl alcohol copolymer. Furthermore, it is important to maintain sufficient pressure of at least 200 psi at the point where hydrogen bonding occurs for a sufficient amount of the hydrogen bonding to be maintained.

THEORETICAL BONDING REACTION

Referring particularly to Figures 1-4, the theoretical chemical reaction which forms a surface bond during the contact between the various alternating layers of the present invention including thermoplastic urethane and the copolymer of ethylene and vinyl alcohol occur across substantially the entire intended contact surface area of the membranes 10 can be summarized as follows:

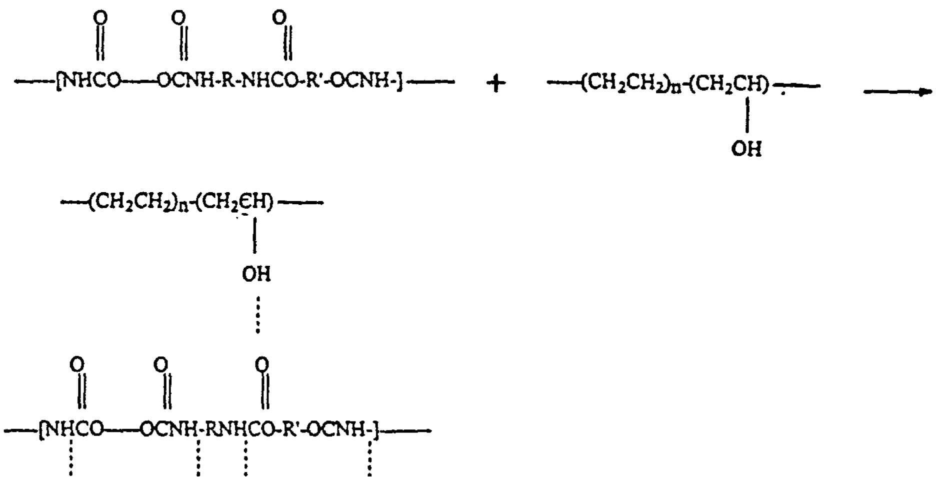

where R is

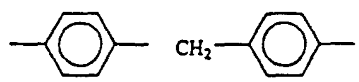

and R' is a short chain diol such as $(CH_2)_4$

Tests were conducted on materials used to form the laminated membranes 10 of the present invention and on samples of the membranes to characterize the theoretical reaction. Initially, a sample of a commercially available form of thermoplastic urethane (namely Pellethane™) was placed in a solution of ethylene diamine to determine whether any free isocyanate groups were present. No precipitation occurred; thus, no urea was formed. It was accordingly theorized that no available isocyanate groups were present to potentially bond with the hydroxyl groups offered by the vinyl alcohol constituent of the copolymer of ethylene and vinyl alcohol. Thus, no conventional isocyanate/polyol reaction is taking place as described in U.S. Patent No. 5,036,110.

Thereafter, samples in the form of thin films were prepared for use in characterizing the possible surface reaction between oxygen molecules contained on the thermoplastic urethane and hydroxyl groups offered by the vinyl alcohol constituent of the copolymer of ethylene and vinyl alcohol. Relatively thin films were prepared of Elastollan® C-90A-13(000) polyester based thermoplastic urethane, Pellethane™ 2355-87AE polyester based thermoplastic urethane and SOARNOL™ ethylene vinyl alcohol copolymer. Additionally, a thin film was formed from a three layer laminate including a first layer of Pellethane™ 2355-80AE or 2355-80AE, a second layer of EVAL™ and a third layer of Pellethane™ 2355-80AE. According to the Fourier Transform Infrared Radiation Spectrum shown in Figures 7 through 10, a significant presence of hydrogen bonding was detected in each film at approximately the 3400 wave number, $cm^{-1}$. Thus, the strong bond observed in the membranes of the present invention (without cross-linking or the use of a tie-layer or adhesive) appears to be generated by hydrogen bonding which is observed to occur over substantial lengths of the membranes of the present invention. Accordingly, membranes of the present invention employing alternating layers of thermoplastic urethane and copolymers of ethylene vinyl alcohol will resist delamination (except when disposed in highly polar solvents) without requiring adhesive or tie-layers.

In addition to the theoretical hydrogen bonding which occurs, other factors such as orientation forces and induction forces, otherwise known as van der Waals forces, which result from London forces which exist between any two molecules and dipole-dipole forces which are present between polar molecules, also contribute to the bond strength between contiguous layers of thermoplastic material and the main barrier material.

The hydrogen bonding between layers of thermoplastic urethane and the ethylene-vinyl alcohol copolymer of the present invention is in contrast to prior art embodiments which, failing to recognize the existence and/or potential of such bonding, typically have used adhesive tie-layers such as Bynel, for example, to improve and maintain the bonding between the various layers of thermoplastic urethane and ethylene vinyl alcohol. The arts' failure to recognize the existence and/or potential of such bonding is further illustrated in U.S. Patent No. 5,036,110. The patent discloses a pre-mixing of the a copolymer of ethylene and vinyl alcohol with thermoplastic polyurethane in order to provide a barrier layer which is sandwiched between layers of thermoplastic polyurethane. This is believed to be significantly

different than substantially unmixed layers of thermoplastic urethane and copolymer of ethylene and vinyl alcohol. The Patentee of US Patent No 5 036 110 further suggests that the premixed layer of thermoplastic urethane and ethylene and vinyl alcohol copolymer must be further modified in order to be securely bound to the two TPU layers.

It should be recognized that the numerous possible products which can be formed from the membranes 10 disclosed herein are virtually only limited by processing considerations. Further, the average thicknesses of any layers of thermoplastic urethane and ethylene vinyl alcohol copolymer is essentially a fraction of the intended use of the final product. In this regard, it should also be recognized by those skilled in the art that different forms of thermoplastic urethanes and copolymers of ethylene and vinyl alcohol can be employed within the same multi-layer laminated membrane, provided the forms used give rise to the above described hydrogen bonding. Likewise, the durometer hardness of the materials can be altered to accommodate customer needs.

Referring now to Figures 14 to 18, there is shown an athletic shoe 10, including a sole structure and a cushioning device otherwise referred to herein as a laminated membrane in accordance with the teachings of the present invention. The shoe 10 includes a shoe upper 12 to which the sole 14 is attached. The shoe upper 12 can be formed from a variety of conventional materials including, but not limited to, leathers, vinyls, nylons and other generally woven fibrous materials. Typically,the shoe upper 12 includes reinforcements located around the toe 16, the lacing eyelets 18, the top of the shoe 20 and along the heel area 22. As with most athletic shoes, the sole 14 extends generally the entire length of the shoe 10 from the toe region through the arch region 245 and back to the heel portion 22.

In accordance with the present invention, the sole structure 14 includes one or more selectively permeable membranes 28 which are preferably disposed in the mid-sole 26 of the sole structure. By way of example, the membranes 28 of the present invention can be formed having various geometries such as the plurality of tubular members which are positioned in a spaced apart, parallel relationship to each other within the heel region 22 of the mid sole 26 as illustrated in Figures 14 to 18. The tubular members 28 are sealed inflatable membranes which contain an injected captive gas. More specifically, each of the membranes 28 are formed to include a barrier layer which permits diffusion of mobile gases therethrough but which resists or prevents diffusion of the captive gases. These predetermined diffusion properties of the membrane 28 are provided by an inner barrier layer 30 which is disposed in direct contiguous contact along the inner surface of a thermoplastic outer layer 32. These two membrane layers may be best seen in Figures 17 and 18. As previously noted, the membranes 28 of the present invention can be formed in a variety of configurations or shapes. For example, alternative membranes 28B could be formed in the shape of a heel ped as illustrated in FIGS. 21 and 22. Athletic shoes including the heel ped configurations set forth in FIGS.21 and22 have been used commercially and sold under the trademark Air Health Walker Plus™ by Nike, Inc. of Beaverton, Oregon. The heel ped configuration of FIGS. 21 and 22 is also shown in U.S. Design Patent Application Serial No. 007,934, filed on April 20, 1993. Similarly, heel peds having a geometry substantially similar to the membrane embodiment 28C illustrated in FIG. 23 have been used in athletic shoes sold under the trademark Air Structure II™ by Nike, Inc. The heel ped configuration of FIG. 23 is also shown in U.S. Design Patent No. 343,504, issued on January 25, 1994. By way of further example, an alternate membrane 28D illustrated with reference to FIGS. 24-26, is currently used in athletic shoes sold under the trademarks Air Max$^2$™ and Air Max$^2$CB™, also owned by Nike, Inc. are formable in accordance with the teachings of the present invention. This membrane configuration is also shown in U.S. Design Patent No. 349,804, issued on August 23, 1994, and U.S. Design Patent No. 350,016 issued on August 30, 1994. Yet, another alternative membrane 28E is illustrated with reference to FIGS. 27-29. The membrane 28E is currently utilized in athletic shoes sold under the trademark Air Max™ by Nike, Inc. This membrane configuration is also shown in U.S. Design Patent Application No. 897,966, filed on June 12, 1992. Still another membrane configuration designated by reference numeral 28F is illustrated in FIGS. 30 and 31. As should be appreciated by this point, membrane configurations under the present invention (whether in the form of a tube, an elongated ped or other such configuration), may either be fully or partially encapsulated within the mid-sole or out-sole of an article of footwear.

While a number of the tubular members and heel peds having a geometry similar to those illustrated herein have been used commercially, such tubular members and heel peds as utilized in prior embodiments have typically been formed from single elastomeric materials. By way of example, the materials often used for the membranes (or envelopes as the term is used in such cited references) were typically selected from the group consisting of polyurethane elastomer materials, polyester elastomers, fluoro elastomers, polyvinyl chloride elastomers and the like wherein the resulting products were inflated with one or more super gases. Polyurethane elastomer materials were generally preferred because of their superior heat sealing properties, flexural fatigue strength, suitable modulus of elasticity, tensile and tear strength and abrasion resistance. However, art-disclosed polyurethane elastomer systems (i.e., employed alone or in combination with crystalline materials) tend to be much less effective as a barrier against the undesired diffusion of gases and super gases than the membranes of the present invention. Thus, it is a goal of the present invention to take advantage of the characteristics offered by polyurethane elastomers in general, while enhancing such characteristics by providing an improved barrier material which offers the advantages of diffusion pumping without resorting to the use of an adhesive or tie-layer, and which can be used in a wide variety of art-disclosed manufacturing processes.

Referring again to FIGS. 14-18 there is illustrated a first embodiment of a membrane 28 in accordance with teachings of the present invention. As shown, the membrane 28 has a composite structure including an outer layer 32 formed of a flexible resilient elastomeric material which preferably is resistant to expansion beyond a predetermined maximum volume for the membrane when subjected to gaseous pressure. The membrane 28 also includes an inner layer 30 formed of a barrier material which allows for controlled diffusion pumping or self-pressurization.

The outer layer 32 as previously noted, preferably is formed of a material or combination of materials which offer superior heat sealing properties, flexural fatigue strength, a suitable modulus of elasticity, tensile and tear strength and abrasion resistance. Among the available materials which offer the cited characteristics, it has been found that thermoplastic elastomers of the urethane variety, otherwise referred to herein as thermoplastic urethanes or simply TPU's, are highly preferred because of their excellent processibility. By the term "thermoplastic," as used herein, is meant that the material is capable of being softened by heating and hardened by cooling through a characteristic temperature range, and can therefore be shaped into various articles in the softened state via various techniques.

Among the numerous thermoplastic urethanes which are useful in forming the outer layer 32 are urethanes such as Pellethane™, (a trademarked product of the Dow Chemical Company of Midland, Michigan); Elastollan® (a registered trademark of the BASF Corporation); and ESTANE® (a registered trademark of the B.F. Goodrich Co.); all of which are either ester or ether based, have proven to be particularly useful. Still other thermoplastic urethanes including at least segments based on polyesters, polyethers, polycaprolactone and polycarbonate macroglycols can be employed.

The inner layer 30 is the main barrier constituent primarily responsible for controlling gas permeation. The layer 30 is made from one material including a co-polymer of ethylene and vinyl alcohol and optionally material selected from the group consisting of polyvinylidene chloride, co-polymers of acrylonitrile and methyl acrylate, such as BAREX™ which is a trademarked product of the British Petroleum Co., polyesters such as PET (Polyetheneterephelate), aliphatic and aromatic polyamides, liquid crystal polymers, and polyurethane engineering thermoplastics such as ISOPLAST, a trademark of Dow Chemical Co.

Of the above listed materials, an inner layer 30 formed from a co-polymer which includes ethylene and vinyl alcohol (otherwise referred to herein as EVOH) is highly preferred being a copolymer which consists essentially of ethylene and vinyl alcohol. One such type of highly preferred ethylene and vinyl alcohol-based co-polymer is a commercially available product known as SOARNOL™ which is available from the Nippon Gohsei Co., Ltd. (U.S.A.) of New York, N.Y. Another highly commercially available copolymer of ethylene and vinyl alcohol is EVAL® which is available from Eval Company of America, Lisle, Illinois. Highly preferred commercially available copolymers of ethylene and vinyl alcohol will typically have an average ethylene content of between about 27 mol% to about 48 mol%. In general, higher ethylene contents result in stronger bonding between the respective layers of thermoplastic urethane and ethylene-vinyl alcohol copolymers.

Diffusion pumping is described in U.S. Patent No. 4,340,626, previously incorporated herein by reference. As discussed in this patent, the gas used for inflating the membrane is different from ambient air surrounding the membrane, or, it is at least partially different from the ambient air surrounding the membrane. The inflating gas, referred to as "super gas," is selected from a group of gases having large molecules and low solubility coefficients, such gas exhibiting very low permeabilities and an inability to diffuse readily through the inner barrier layer. With the membrane surrounded by ambient air, it is noted that the pressure within the membrane rises comparatively rapidly after initial inflation. The rise in pressure may be due to the nitrogen, oxygen, and argon in the ambient air diffusing through the membrane to its interior, until the partial pressure of air contained within the membrane equals the atmospheric pressure outside the enclosure. Since the initial inflating gas can diffuse out through the enclosure only very slowly, while the ambient air is diffusing inwardly, the total pressure within the enclosure rises appreciably. Such total pressure is therefore the sum of the partial pressures of the air within the membrane and the pressure of the initial inflating gas within the membrane.

As further discussed in the '626 patent, the pressure rises above the initial inflation pressure during the first two to four months of the diffusion pumping action, and then slowly starts to decline. When the total pressure rise reaches its peak level, diffusion pumping has progressed to the point that the partial pressure of air within the membrane has reached its maximum. At this point, the membrane is now filled with a maximum amount of pressurizing medium (air) which cannot diffuse out of the device, because the pressure of the inside air is in equilibrium with the outside ambient air. Additionally, the super gas pressure is now less than it was at initial inflation, primarily because of the increase in volume of the device due to stretching of the elastomeric film. At the lower pressure, the normally very low diffusion rate of the super gas is reduced to even lower values. Both of these two factors, i.e. maximum air at equilibrium pressure and minimum diffusion of super gas, contribute to long term pressurization at essentially constant pressure.

After the pressure reaches a peak, the rate of decline is very low, the total pressure in the membrane remains above the initial pressure for about two years or longer thereafter, depending upon the particular inflation gas used, the material from which the membrane is made and the inflation pressure. As noted above, the decline in pressure may continue, but in view of the slow rate of diffusion of the gas from the membrane, the pressure in the membrane

remains sufficiently high so as to enable the membrane to continue to be used effectively for several additional years. The membrane is, therefore, essentially permanently inflated.

For practical commercial utility with products of the present invention, it is important to have an appropriate and optimized balance between: (1) The minimum rate of activated diffusion on the one hand and (2) such physical properties as fatigue resistance, manufacturing processability, and heat-sealability on the other hand. Thus, it is preferable that the membranes not form a 100% barrier against diffusion allowing gases such as oxygen to diffuse therethrough while effectively preventing other gases, including nitrogen and the super gases, from diffusing through the membrane.

The fact that oxygen can diffuse through the membrane is not a problem and is, in fact, a desirable and unique benefit. For example, after inflating the membrane with nitrogen and/or super gas, the oxygen of the ambient environment can diffuse into the membrane through the mechanism of diffusion pumping as previously described. Thus, the partial pressure of oxygen is added to the partial pressures of nitrogen and/or super gas already contained within the membrane, with the result being that the total pressure of the product rises. The partial pressure of oxygen in the ambient atmosphere is about 17.2 kPa (2.5 psi) (out of a total pressure at sea level of 101.4 kPa (14.7 psi)). Thus, the reverse diffusion of oxygen gas into the membrane will cause a maximum rise in pressure of about 17.2 kPa (2.5 psi.) Such a rise in pressure is useful in offsetting the substantial tensile relaxation of the membrane (with resultant increase in the internal volume of the enclosure) where all of the gas components of air diffuse into the membrane. Thus, one of the features of this invention is that the composite material of the membrane is a semi-permeable membrane to the gases in air other than nitrogen and is therefore not a complete gas barrier. The practical advantage is that the pressure loss due to volume increases from film relaxation are still offset by diffusion pumping of oxygen.

One of the practical advantages of controlling permeability and diffusion pumping relates to matching the tensile relaxation properties of the product with the changes in pressure due to retention of the captive gas and diffusion of the mobile gas. For example, in some products it is desirable to use a film either with a lower modulus of elasticity or thinner gage to provide a softer feel to the cushioning device. With lower gage or lower modulus, there is a greater tendency for the captive gas to diffuse through the barrier. To compensate for such loss, the device may be overinflated slightly. However, due to the thinness or low modulus of the film, the device tends to enlarge with the result being a product whose geometry is not quite that desired or which changes over time. Thus, by providing relatively thicker inner and outer layers 30 and 32, respectively, the modulus of elasticity is increased and also the flow of the captive gas is reduced and the product is able to maintain inflatant pressure with a comparatively small change in configuration without the need to substantially overinflate the product.

Due to the diffusion pumping capacity of the present invention, less expensive captive gases may be used. Additionally, light weight and less expensive materials may be used for the outermost layer 32 of the composite structure. The following table compares two super gases with less expensive captive gases that effectively act as super gases in accordance with the teachings of the present invention.

One cubic foot of gas or vapor at 25 psi and 70° F. 0.028 $m^3$ at 172 kPa and 21°C

| | LBS/FT$^3$ OF VAPOR OR GAS AT 25 PSI AND 70° F. | DOLLARS PER LB. (0.45 kg) |
|---|---|---|
| Hexafluoroethane (Super gas) | 1.00 | $7.19 |
| Sulfurhexafluoride (Super gas) | 1.05 | $5.90 |
| Nitrogen | 0.19 | $0.09 |
| Air | 0.20 | Zero |

Although not typically classified as super gases, air and nitrogen have been added to the table above because, from the standpoints of availability, cost and weight they are excellent inflating gas candidates in the practice of the present invention.

One of the important advantages of this invention is apparent from the membrane illustrated in FIGS. 11 and 12. As noted, there may be no substantial expansion of the membrane over the period of diffusion pumping, depending upon the geometry of the cushioning device. The overall dimensions of the membrane remain within about 3 to 5% of the original dimensions. Thus, the shape and geometry of the membrane remain fairly constant over the period of time from initial inflation, through diffusion pumping and through the useful life of the product.

As previously noted, the membranes as disclosed herein can be formed by various processing techniques

including but not limited to blow molding, injection molding, vacuum molding and heat sealing or RF welding of tubing and sheet extruded film materials. Preferably, the membranes according to the teachings of the present invention are made from films formed by co-extruding the outer layer of thermoplastic urethane material and the inner layer of the ethylene-vinyl alcohol co-polymer together to effectively produce multi-layered film materials with the resulting membranes produced from this material. Subsequently, after forming the multi-layered film materials, the film materials are heat sealed or welded by RF welding to form the inflatable membranes which have the characteristics of both high flexibility and diffusion pumping capabilities.

Referring now to FIGS. 19 and 20 an alternative membrane embodiment 28A in the form of an elongated tubular shaped multi-layered component is illustrated. The modified membrane 28A is essentially the same as the composite structure illustrated in FIGS. 14-18 except that a third layer 34 is provided contiguously along the inner surface of the barrier layer 30, such that the barrier layer 30 is sandwiched between the outer layer 32 and innermost layer 34. The innermost layer 34 is also preferably made from a thermoplastic urethane based material to add further protection against moisture for the barrier layer 30. In addition to the benefits of enforced protection against degradation of the barrier layer 30, layer 34 also tends to assist in providing for high quality welds which allows for the three-dimensional shapes of the bladders.

The air bladders shown in FIGS. 14-20 are preferably fabricated from multi-layered extruded tubes. Lengths of the coextruded tubing ranging from one foot to coils of up to 5 feet, are inflated to a desired initial inflation pressure ranging from 0 kPa (0 psi) ambient to 689 kPa (100 psi), preferably in the range of 34 to 345 kPa (5 to 50 psi), with a captive gas, preferably nitrogen. Sections of the tubing are RF welded or heat sealed to the desired lengths to define an interior compartment 35. The individual bladders produced may then be separated by cutting through the welded areas between bladders. It should also be noted that the air bladders can be fabricated with so-called lay flat extruded tubing with the internal geometry being welded into the tube.

As the thermoplastic urethane and main barrier material (i.e. EVOH) advance to the exit end of the extruder through individual flow channels, once they near the die-lip exit, the melt streams are combined and arranged to float together in layers typically moving in laminar flow as they enter the die body. Ideally, the materials are combined at a temperature of between about 149°C (300° F) to about 232°C (450° F) to obtain optimal wetting for maximum adhesion between the contiguous portions of the layers 30, 32 and 34 respectively.

As will be discussed in more detail in connection with FIGS.19 and 20, according to FIGS. 19 and 20, the membrane 28A comprises three layers including a first layer of thermoplastic urethane 32, a second intermediate layer of a barrier material 30, and a third layer 34 of a thermoplastic urethane arranged in a "sandwich" configuration.

In a highly preferred embodiment, the two thermoplastic urethane layers and the layer of ethylene-vinyl alcohol copolymer are coextruded employing temperatures which are sufficiently elevated to cause contact between the layers substantially throughout thus eliminating the need for an intermediate adhesive or bonding layer.

While not intending to be bound by current theory and knowledge, it is believed that thermoplastic urethane and ethylene vinyl alcohol copolymer prepolymerized sheets, when brought into contact at temperatures in the range of about 149°C (300° F) to about 232°C (450° F) (e.g., coextruded for example) at a pressure of at least about 1379 kPa (200 psi), allow sufficient hydrogen bonding to take place such that an integral laminate is provided.

Preferably, the thermoplastic polyurethane and ethylene vinyl alcohol are not modified in an effort to create cross-linking or conventional covalent bonding between the two layers; nor are any tie-layers or adhesive employed. The preferred compositions and methods of the present invention rely exclusively on the inherent properties of the thermoplastic urethane and copolymer of ethylene and vinyl alcohol when brought into contact according to the methods of the present invention.

The apparent chemical reaction which forms a surface bond between the various alternating layers is described above in the section headed "Theoretical Bonding Reaction".

In the invention, significant bonding occurs as the result of available hydrogen molecules being donated by the vinyl alcohol group of the ethylene-vinyl alcohol copolymer along the length of the laminated membrane and the hydroxyl groups of the urethane, or simply the available polar groups.

It should also be noted that the composition of the thermoplastic urethane also has an effect on the bonding between the barrier layer 30 (i.e. ethylene-vinyl alcohol) and the outer layer 32 and inner layer 34 (i.e. thermoplastic urethane). Additionally, fillers such as non-polar polymeric materials and inorganic fillers or extenders such as talc, silica, mica etc, tend to negatively affect the bonding capacity of the thermoplastic urethane and ethylene vinyl alcohol materials.

In general, the thermoplastic urethane (i.e. polyurethanes) of the present invention have alternating block copolymers having (20 to 50%) of a hard segment, linked by soft segments (50 to 80%) of elastomeric materials (polyester or polyethers) which are rubber-like at normal service temperatures. The hard and soft segments may be ordered or random along the polymer chain. The composition of the hard blocks is typically diphenyl urethane diisocyanate, commonly referred to as MDI, and 1-4 butane diol. When heated, the hard and soft TPU block copolymer segments melt and the material becomes fluid, and some urethane bonds may dissociate. When cooled, the segments

reharden and link the soft segments to give a solid-state structure similar to thermoplastic rubber. Also, since the TPU elastomers are relatively polar, they are quite readily heat-sealable, especially with a R-F dielectric heat-sealing.

In FIGS. 25-29 bladders fabricated by blow molding are shown. Parisons of two layer, or preferably three layer film are coextruded. The parisons are then blown and formed using conventional blow molding techniques. The resulting bladders, shown best in FIGS. 25 and 28 are then inflated with the desired captive gas to the preferred initial inflation pressure and then the inflation port (e.g. inflation port 38) is sealed by RF welding.

Another preferred bladder fabrication method is shown in FIGS. 21-23. Sheets or films of coextruded two layer, or preferably three layer film are first formed. The thickness range of the coextruded sheets or films is between 0.025 mm (0.001 inches) to 2.54 mm (0.100 inches), preferably 0.254 mm (0.010 inches) to 1.27 mm (0.050 inches). Two sheets of the multi-layer film are placed on top of each other and welded together along selected points using conventional heat sealing techniques or RF welding techniques to form an interior compartment. The interior compartment of the uninflated bladder is then inflated through the formed inflation port 130 to the desired initial inflation pressure which ranges from 0 kPa (0 psi) ambient to 689 kPa (100 psi), preferably 34 kPa to 345 kPa (5 to 50 psi). The preferred captive gas is nitrogen.

Another preferred bladder as shown in FIGS. 30 and 31 is fabricated by forming co-extruded two and three layer tubing. The thickness range of the co-extruded tubing wall, i.e. a cross-section through all layers, is between 0.025 mm (0.001 inches) to about 2.54 mm (0.100 inches) and preferably between 0.254 mm (0.010 inches) to 1.27 mm (0.050 inches). The tubing is collapsed to a lay flat configuration and the opposite walls are welded together at selected points and at each end using conventional heat sealing techniques or RF welding. The bladder is then inflated through the formed inflation port 38 to the desired inflation pressure which ranges from 0 kPa (0 psi) ambient to 689 kPa (100 psi), and preferably from 34 kPa to 345 kPa (5 to 50 psi), with the preferred captive gas being nitrogen.

The various products described in the figures presented are designed to be used as mid-soles for articles of footwear, and particularly in athletic shoes. In such applications, the inflatable membranes may be used in any one of several different embodiments: (1) completely encapsulated in a suitable mid-sole foam; (2) encapsulated only on the top portion of the unit to fill-in and smooth-out the uneven surfaces for added comfort under the foot; (3) encapsulated on the bottom portion to assist attachment of the out-sole; (4) encapsulated on the top and bottom portions but exposing the perimeter sides for cosmetic and marketing reasons; (5) encapsulated on the top and bottom portions but exposing only selected portions of the sides of the unit; (6) encapsulated on the top portion by a molded "Footbed"; and (7) used with no encapsulation foam whatsoever.

By way of further example, gas transmission rates for various materials most of which are included with the scope of the present invention are illustrated in FIG. 32 As can be seen from a review of FIG. 32 the laminated products offer the advantages of relative low gas transmission rates in addition to the flexible characteristics offered by the thermoplastic urethane constituent.

## Claims

1. A sealed, captive gas-inflated bladder suitable for use in cushioning comprising:

    a flexible membrane having a gas transmission rate of 10 or less with respect to said captive gas, said membrane comprising:

        a first layer including as the polymeric component a thermoplastic urethane; and
        a second layer including a copolymer of ethylene and vinyl alcohol, and optionally a material selected from the group consisting of aliphatic and aromatic polyamides, polyvinylidene chloride, copolymers of acrylonitrile and methyl acrylate, polyesters, liquid crystal polymers, polyurethane based thermoplastics and mixtures thereof;

    whereby said first and second layers are brought into contact, wherein such contact results in hydrogen bonding between the thermoplastic urethane in the first layer and the copolymer of ethylene and vinyl alcohol in the second layer.

2. A bladder as claimed in claim 1 in which the membrane is permeable with respect to oxygen.

3. A bladder as claimed in claim 1 or 2 in which the captive gas has a pressure of 34.5 to 345.7 kPa (5 to 50 psi).

4. A bladder as claimed in any one of the preceding claims wherein the thermoplastic polyurethane has a soft segment content of from 50 to 80 weight percent.

**5.** A bladder as claimed in any one of the preceding claims wherein the captive gas is nitrogen or a super gas.

**6.** A captive gas-inflated bladder according to any one of the preceding claims, wherein said flexible membrane has a gas transmission rate of less than 7.5.

**7.** A captive gas-inflated bladder according to any one of the preceding claims, wherein said flexible membrane has a gas transmission rate of less than 5.

**8.** A captive gas-inflated bladder according to any one of the preceding claims, wherein said flexible membrane has a gas transmission rate of less than 2.

**9.** A bladder as claimed in any one of the preceding claims wherein said contact that results in hydrogen bonding occurs over substantially the entire surface area of contact between said first and second layers.

**10.** A bladder as claimed in any one of the preceding claims further comprising a third layer of material including thermoplastic urethane, wherein said third layer is in contact with the second layer on the side opposite to said first layer.

**11.** A bladder according to claim 10 wherein said second layer has an average thickness of between 10 to 500 microns.

**12.** A bladder according to claim 11, further comprising a fourth layer including a copolymer of ethylene and vinyl alcohol which is in contact with either of said first or second layers and a fifth layer including thermoplastic urethane which is in contact with said fourth layer.

**13.** A bladder according to any one of the preceding claims, wherein said thermoplastic urethane includes at least segments of materials selected from the group consisting of polyester, polyether, polycaprolactone, polyoxypropylene and polycarbonate based materials and mixtures thereof.

**14.** A bladder according to any one of the preceding claims, wherein said ethylene vinyl alcohol is selected from the group consisting of copolymers including an ethylene content of between 27 mol% to 48 mol%.

**15.** A bladder as claimed in any one of the preceding claims which comprises an annular collar having two adjacent layers, each of which includes a thermoplastic polyurethane.

**16.** A bladder according to any one of the preceding claims, wherein said first layer has an average thickness of between 0.025 mm (0.001") to 2.5 mm (0.1").

**17.** A bladder according to any one of the preceding claims, wherein said second layer has an average thickness of between 0.025 mm (0.001") to 0.25 mm (0.01").

**18.** A bladder according to any one of the preceding claims, wherein said first layer has an average thickness of between 0.125 mm (0.005") to 1.25 mm (0.05") and said second layer has an average thickness of between 0.63 mm (0.0025") to 0.125 mm (0.005").

**19.** The bladder according to claim 10 or any claim dependent thereon, wherein said first layer has an average thickness below 0.01 mm (0.00039") and the third layer has an average thickness above 0.01 mm (0.00039").

**20.** A method for producing a bladder as claimed in any one of the preceding claims wherein the flexible membrane is produced by a process which comprises laminating together the first layer and the second layer at a temperature of between 149°C to 232°C (300°F to 450°F).

**21.** A shoe comprising a sealed, gas-inflated bladder as claimed in claims 1 to 19 or as produced according to claim 20.

**22.** A shoe according to claim 21, wherein said bladder is completely encapsulated in a mid-sole foam.

**23.** A shoe according to claim 21, wherein said bladder is encapsulated only on a top portion in a mid-sole foam.

**24.** A shoe according to claim 21, wherein said bladder is encapsulated only on a bottom portion in a mid-sole foam.

**25.** A shoe according to claim 21, wherein said bladder is encapsulated on a top portion and a bottom portion in a mid-sole foam, wherein at least a portion of the side of said bladder is exposed.

**26.** A shoe according to claim 21, wherein said bladder is encapsulated on the top portion by a molded footbed.

**27.** A shoe according to claim 21, wherein said bladder is used as a mid-sole without encapsulation foam.

**28.** A cushioning device comprising a bladder according to any one of claims 1 to 19.

**Patentansprüche**

**1.** Versiegelte Schlauchblase mit darin eingefangenem Gas, geeignet zur Verwendung zur Polsterung, umfassend:

eine flexible Membran mit einer Gasdurchlässigkeit von 10 oder weniger bezüglich des eingefangenen Gases, welche Membran umfasst:

eine erste Schicht, die als der polymeren Komponente ein thermoplastisches Urethan enthält; und

eine zweite Schicht, die ein Copolymer von Ethylen und Vinylalkohol enthält, und wahlweise ein Material, gewählt aus der Gruppe, bestehend aus aliphatischen und aromatischen Polyamiden, Polyvinylidenchlorid, Copolymeren von Acrylonitril und Methacrylat, Polyestern, flüssigkristallinen Polymeren, auf Polyurethan basierenden Thermoplasten und Gemischen davon;

wobei die ersten und zweiten Schichten in Kontakt gebracht werden, welcher Kontakt in einer Wasserstoffbindung zwischen dem thermoplastischen Urethan in der ersten Schicht und dem Copolymer von Ethylen und Vinylalkohol in der zweiten Schicht resultiert.

**2.** Blase nach Anspruch 1, bei welcher die Membran bezuglich des Sauerstoffs durchlässig ist.

**3.** Blase nach Anspruch 1 oder 2, bei welcher das eingefangene Gas einen Druck von 34,5 bis 345,7 kPa (5 bis 50 psi) aufweist.

**4.** Blase nach einem der vorangehenden Ansprüche, wobei das thermoplastische Polyurethan einen Weichsegmentgehalt von 50 bis 80 Gewichtsprozent aufweist.

**5.** Blase nach einem der vorangehenden Ansprüche, wobei das eingefangene Gas Stickstoff oder ein supraflüssiges Gas ist.

**6.** Schlauchblase mit darin eingefangenem Gas nach einem der vorangehenden Ansprüche, wobei die flexible Membran eine Gasdurchlässigkeit von weniger als 7,5 aufweist.

**7.** Schlauchblase mit darin eingefangenem Gas nach einem der vorangehenden Ansprüche, wobei die flexible Membran eine Gasdurchlässigkeit von weniger als 5 aufweist.

**8.** Schlauchblase mit darin eingefangenem Gas nach einem der vorangehenden Ansprüche, wobei die flexible Membran eine Gasdurchlässigkeit von weniger als 2 aufweist.

**9.** Blase nach einem der vorangehenden Ansprüche, wobei der Kontakt, der zur Wasserstoffbindung führt, an praktisch der gesamten Kontaktoberfläche zwischen der ersten und der zweiten Schicht stattfindet.

**10.** Blase nach-einem der vorangehenden Ansprüche, außerdem umfassend eine dritte Schicht aus einem Material, das thermoplastisches Urethan enthält, wobei die dritte Schicht in Kontakt zur zweiten Schicht auf der Seite entgegengesetzt zur ersten Schicht steht.

**11.** Blase nach Anspruch 10, wobei die zweite Schicht eine mittlere Dicke von zwischen 10 und 500 Mikronen aufweist.

**12.** Blase nach Anspruch 11, außerdem umfassend eine vierte Schicht, die ein Copolymer aus Ethylen und Vinylalkohol

enthält, welche in Kontakt mit einer der ersten oder zweiten Schichten und einer fünften Schicht steht, die thermoplastisches Urethan enthält, welche in Kontakt mit der vierten Schicht steht.

**13.** Blase nach einem der vorangehenden Ansprüche, wobei das thermoplastische Urethan zumindest Segmente aus Materialien enthält, gewählt aus der Gruppe, bestehend aus Polyester, Polyether, Polycaprolacton, Polyoxypropylen und auf Polycarbonat basierende Materialien und Gemische davon.

**14.** Blase nach einem der vorangehenden Ansprüche, wobei der Ethylenvinylalkohol gewählt ist aus der Gruppe, bestehend aus Copolymeren, die einen Ethylengehalt von zwischen 27 Mol-% und 48 Mol-% aufweisen.

**15.** Blase nach einem der vorangehenden Ansprüche, welche einen ringförmigen Hals mit zwei aneinander angrenzenden Schichten umfasst, von denen jede ein thermoplastisches Polyurethan enthält.

**16.** Blase nach einem der vorangehenden Ansprüche, wobei die erste Schicht eine mittlere Dicke von zwischen 0,025 mm (0,001") und 2,5 mm (0,1") aufweist.

**17.** Blase nach einem der vorangehenden Ansprüche, wobei die zweite Schicht eine mittlere Dicke von zwischen 0,025 mm (0,001") and 0,25 mm (0,01") aufweist.

**18.** Blase nach einem der vorangehenden Ansprüche, wobei die erste Schicht eine mittlere Dicke von zwischen 0,125 mm (0,005") und 1,25 mm (0,05") und die zweite Schicht eine mittlere Dicke von zwischen 0,63 mm (0,0025") und 0,125 mm (0,005") aufweist.

**19.** Blase nach Anspruch 10 oder jedem davon abhängigen Anspruch, wobei die erste Schicht eine mittlere Dicke von unter 0,01 mm (0,00039") und die dritte Schicht eine mittlere Dicke von über 0,01 mm (0.00039") aufweist

**20.** Verfahren zur Herstellung einer Blase nach einem der vorangehenden Ansprüche, wobei die flexible Membran mittels eines Verfahrens hergestellt wird, welches das Zusammenkaschieren der ersten Schicht und der zweiten Schicht bei einer Temperatur von zwischen 149°C und 232°C (300°F bis 450°F) umfasst.

**21.** Schuh, umfassend eine versiegelte Schlauchblase mit darin eingefangenem Gas nach einem der Ansprüche 1 bis 19, oder wie nach Anspruch 20 erzeugt.

**22.** Schuh nach Anspruch 21, wobei die Blase vollständig in einen Mittelsohlenschaum eingebettet ist.

**23.** Schuh nach Anspruch 21, wobei die Blase lediglich am oberen Abschnitt in einen Mittelsohlenschaum eingebettet ist.

**24.** Schuh nach Anspruch 21, wobei die Blase lediglich am unteren Abschnitt in einen Mittelsohlenschaum eingebettet ist.

**25.** Schuh nach Anspruch 21, wobei die Blase am oberen Abschnitt und am unteren Abschnitt in einen Mittelsohlenschaum eingebettet ist, wobei zumindest ein Abschnitt der Seite dieser Blase freiliegt.

**26.** Schuh nach Anspruch 21, wobei die Blase am oberen Abschnitt durch ein ausgeformtes Fußbett eingebettet ist.

**27.** Schuh nach Anspruch 21, wobei die Blase als eine Mittelsohle ohne Einbettungsschaum verwendet wird.

**28.** Einbettungsschaum, umfassend eine Blase nach einem der Ansprüche 1 bis 19.

## Revendications

**1.** Vessie étanche, gonflée à l'aide d'un gaz prisonnier, utilisable pour réaliser-un-effet d'amortissement, comprenant :

une membrane souple ayant un indice de perméabilité aux gaz de 10 ou moins par rapport audit gaz prisonnier, ladite membrane comportant :

une première couche dont le constituant polymère est un uréthanne thermoplastique ; et
une seconde couche comportant un copolymère d'éthylène et d'alcool vinylique, et éventuellement une matière choisie dans le groupe comprenant les polyamides aliphatiques et aromatiques, le poly(chlorure de vinylidène), les copolymères d'acrylonitrile et d'acrylate de méthyle, les polyesters, les polymères sous forme de cristaux liquides, les matières thermoplastiques à base de polyuréthanne et les mélanges de ceux-ci;
lesdites première et seconde couches étant mises en contact, ce contact provoquant une liaison hydrogène entre l'uréthanne thermoplastique de la première couche et le copolymère d'éthylène et d'alcool vinylique de la seconde couche.

**2.** Vessie selon la revendication 1, dans laquelle la membrane est perméable à l'oxygène.

**3.** Vessie selon la revendication 1 ou 2, dans laquelle le gaz prisonnier est à une pression comprise entre 34,5 et 345,7 kPa (5 à 50 psi).

**4.** Vessie selon l'une quelconque des revendications précédentes, dans laquelle le polyuréthanne thermoplastique contient entre 50 et 80% en poids de segments souples.

**5.** Vessie selon l'une quelconque des revendications précédentes, dans laquelle le gaz prisonnier est de l'azote ou un gaz supercritique.

**6.** Vessie gonflée par un gaz prisonnier selon l'une quelconque des revendications précédentes, dans laquelle ladite membrane souple a un indice de perméabilité aux gaz inférieur à 7,5.

**7.** Vessie gonflée par un gaz prisonnier selon l'une quelconque des revendications précédentes, dans laquelle ladite membrane souple a un indice de perméabilité aux gaz inférieur à 5.

**8.** Vessie gonflée par un gaz prisonnier selon l'une quelconque des revendications précédentes, dans laquelle ladite membrane souple a un indice de perméabilité aux gaz inférieur à 2.

**9.** Vessie selon l'une quelconque des revendications précédentes, dans laquelle ledit contact qui provoque une liaison hydrogène se produit sensiblement sur toute la surface de contact entre lesdites première et seconde couches.

**10.** Vessie selon l'une quelconque des revendications précédentes, comprenant en outre une troisième couche de matière contenant de l'uréthanne thermoplastique, dans laquelle ladite troisième couche est au contact de la seconde couche sur la face opposée à ladite première couche.

**11.** Vessie selon la revendication 10, dans laquelle ladite seconde couche a une épaisseur moyenne de 10 à 500 micromètres.

**12.** Vessie selon la revendication 11, comprenant en outre une quatrième couche contenant un copolymère d'éthylène et d'alcool vinylique qui est au contact de ladite première couche ou de ladite seconde couche et une cinquième couche contenant de l'uréthanne thermoplastique, qui est au contact de ladite quatrième couche.

**13.** Vessie selon l'une quelconque des revendications précédentes, dans laquelle ledit uréthanne thermoplastique contient au moins des segments de matières choisies parmi le groupe constitué par des matières à base de polyester, de polyéther, de polycaprolactone, de polyoxypropylène et de polycarbonate et des mélanges de celles-ci.

**14.** Vessie selon l'une quelconque des revendications précédentes, dans laquelle ledit copolymère éthylène-alcool vinylique est choisi parmi le groupe constitué de copolymères à teneur en éthylène comprise entre 27% et 48% en moles.

**15.** Vessie selon l'une quelconque des revendications précédentes, comportant un bourrelet annulaire ayant deux couches adjacentes, chacune contenant un polyuréthanne thermoplastique.

**16.** Vessie selon l'une quelconque des revendications précédentes, dans laquelle ladite première couche a une épaisseur moyenne comprise entre 0,025 mm (0,001") et 2,5 mm (0,1").

**17.** Vessie selon l'une quelconque des revendications précédentes, dans laquelle ladite seconde couche a une épaisseur moyenne comprise entre 0,025 mm (0,001") et 0,25 mm (0,01").

**18.** Vessie selon l'une quelconque des revendications précédentes, dans laquelle ladite première couche a une épaisseur moyenne comprise entre 0,125 mm (0,005") et 1,25 mm (0,05") et ladite seconde couche a une épaisseur moyenne comprise entre 0,63 mm (0,0025") et 0,125 mm (0,005").

**19.** Vessie selon la revendication 10 ou l'une quelconque des revendications dépendant de celle-ci, dans laquelle ladite première couche a une épaisseur moyenne inférieure à 0,01 mm (0,00039") et la troisième couche a une épaisseur moyenne supérieure à 0,01 mm (0,00039").

**20.** Procédé pour fabriquer une vessie selon l'une quelconque des revendications précédentes, dans lequel la membrane souple est réalisée par un procédé qui consiste à stratifier l'une avec l'autre la première couche et la seconde couche à une température comprise entre 149°C et 232°C (300°F et 450°F).

**21.** Chaussure comportant une vessie étanche, gonflée au gaz, selon l'une quelconque des revendications 1 à 19 ou fabriquée selon la revendication 20.

**22.** Chaussure selon la revendication 21, dans laquelle ladite vessie est entièrement enfermée dans de la mousse de l'intercalaire.

**23.** Chaussure selon la revendication 21, dans laquelle ladite vessie n'est enfermée que dans une partie supérieure d'une mousse d'intercalaire.

**24.** Chaussure selon la revendication 21, dans laquelle ladite vessie n'est enfermée que dans une partie inférieure d'une mousse d'intercalaire.

**25.** Chaussure selon la revendication 21, dans laquelle ladite vessie est enfermée dans une partie supérieure et une partie inférieure d'une mousse d'intercalaire, au moins une partie du côté de ladite vessie étant découverte.

**26.** Chaussure selon la revendication 21, dans laquelle ladite vessie est enfermée sur la partie supérieure par un "Footbed" moulé.

**27.** Chaussure selon la revendication 21, dans laquelle ladite vessie est utilisée comme intercalaire sans être enfermée dans de la mousse.

**28.** Dispositif d'amortissement comprenant une vessie selon l'une quelconque des revendications 1 à 19.

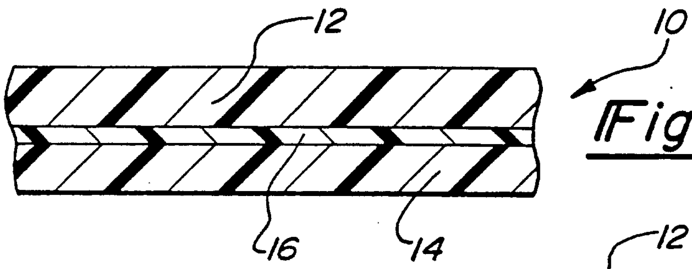


Fig-1

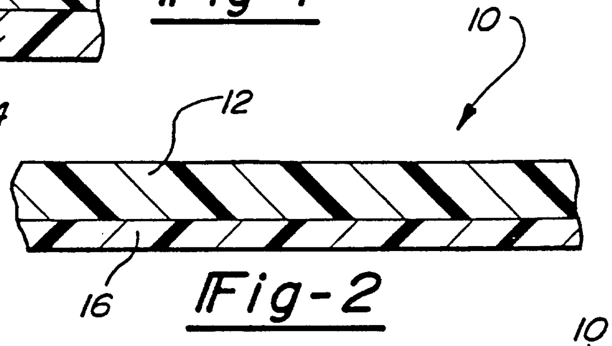


Fig-2

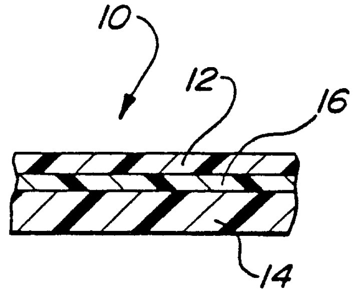


Fig-3

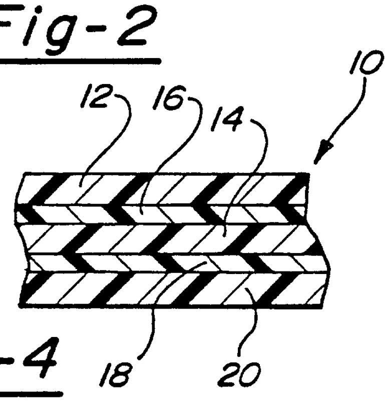


Fig-4

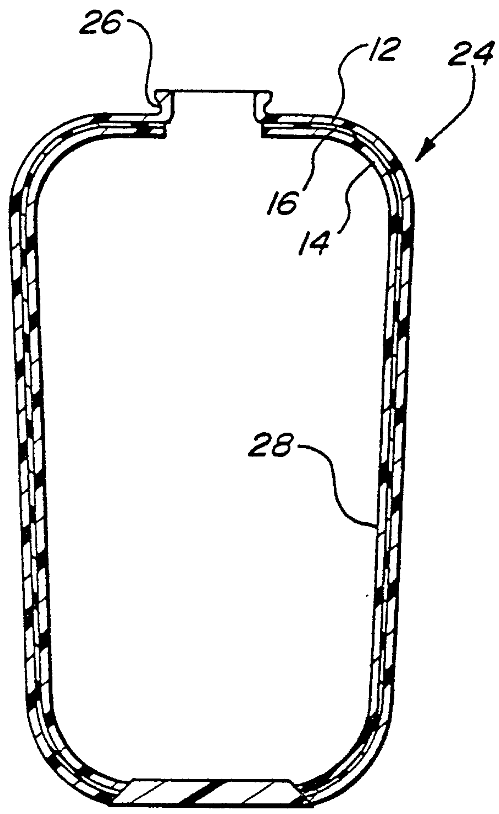


Fig-5

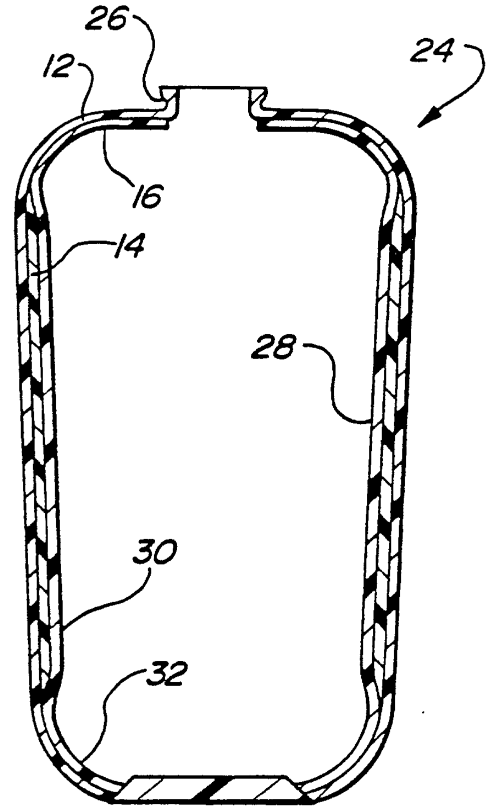


Fig-6

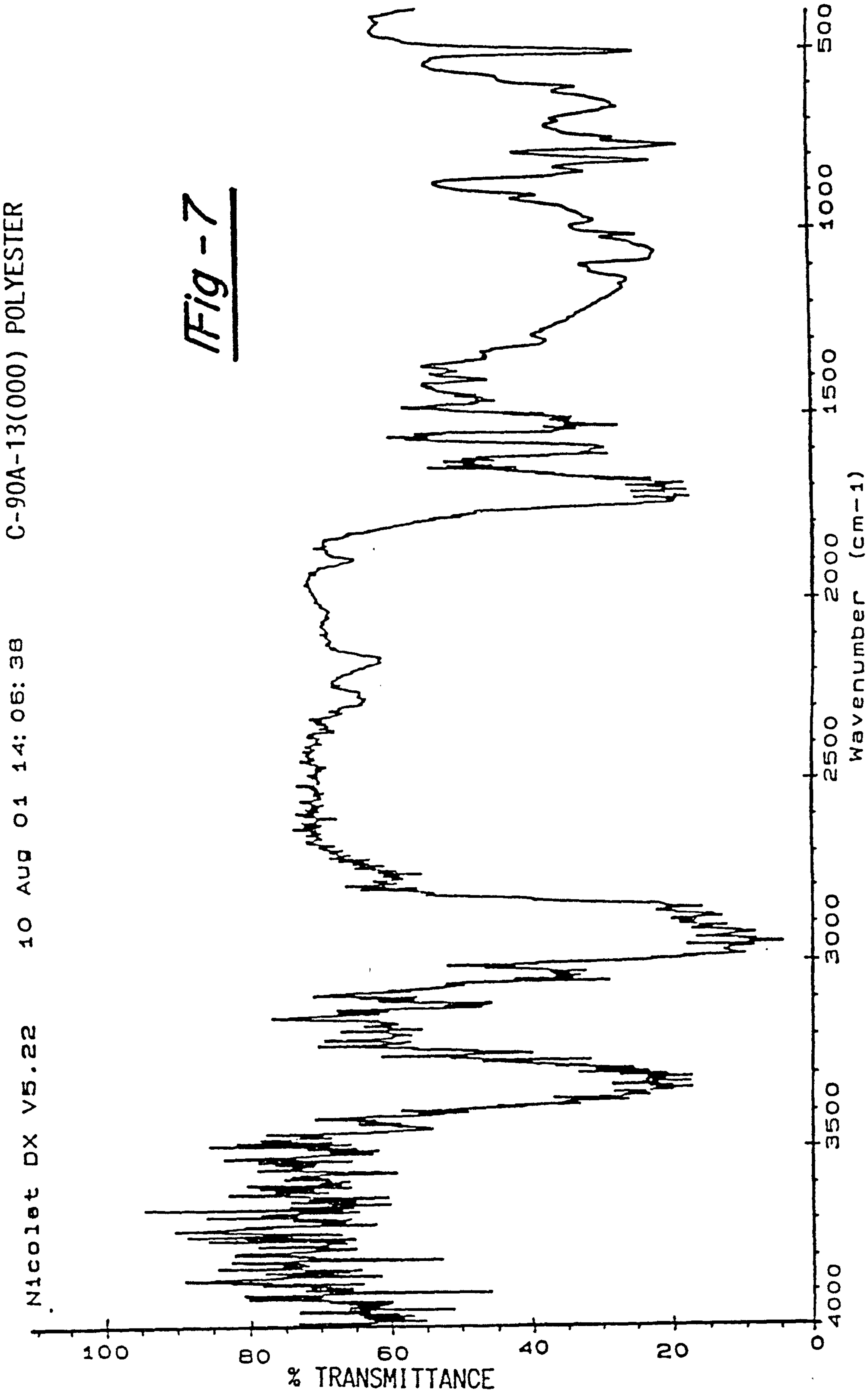
Nicolet DX V5.22
10 Aug 01 14:06:38
C-90A-13(000) POLYESTER
% TRANSMITTANCE
100
80
60
40
20
0
Wavenumber (cm-1)
4000
3500
3000
2500
2000
1500
1000
500

Fig - 7

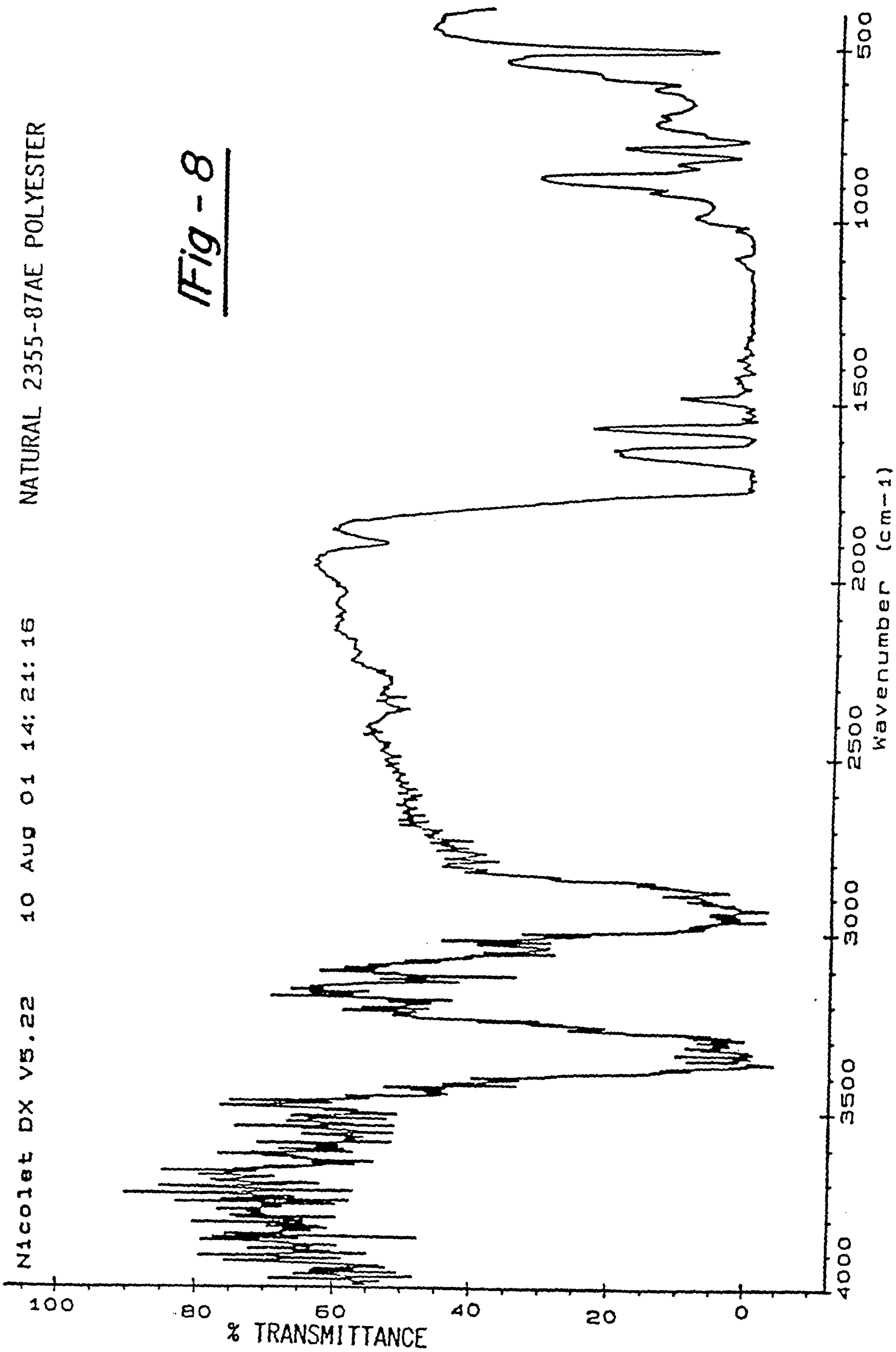
Nicolet DX V5.22
10 Aug 01 14:21:16
NATURAL 2355-87AE POLYESTER
100
80
60
40
20
0
% TRANSMITTANCE
4000
3500
3000
2500
2000
1500
1000
500
Wavenumber (cm-1)

Fig - 8

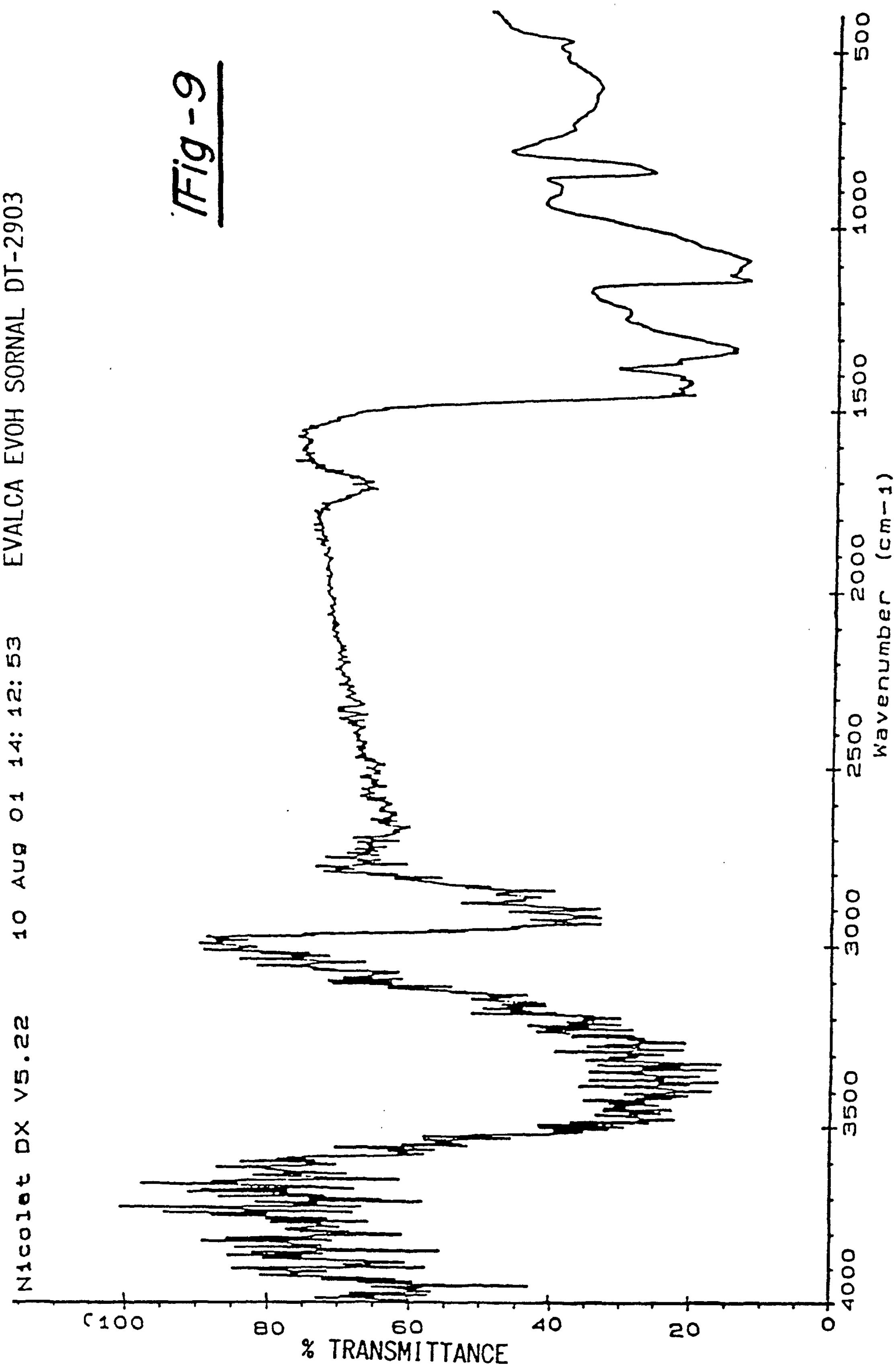
Nicolet DX V5.22
10 Aug 01 14: 12: 53
EVALCA EVOH SORNAL DT-2903
% TRANSMITTANCE
100
80
60
40
20
0
Wavenumber (cm-1)
4000
3500
3000
2500
2000
1500
1000
500

Fig-9

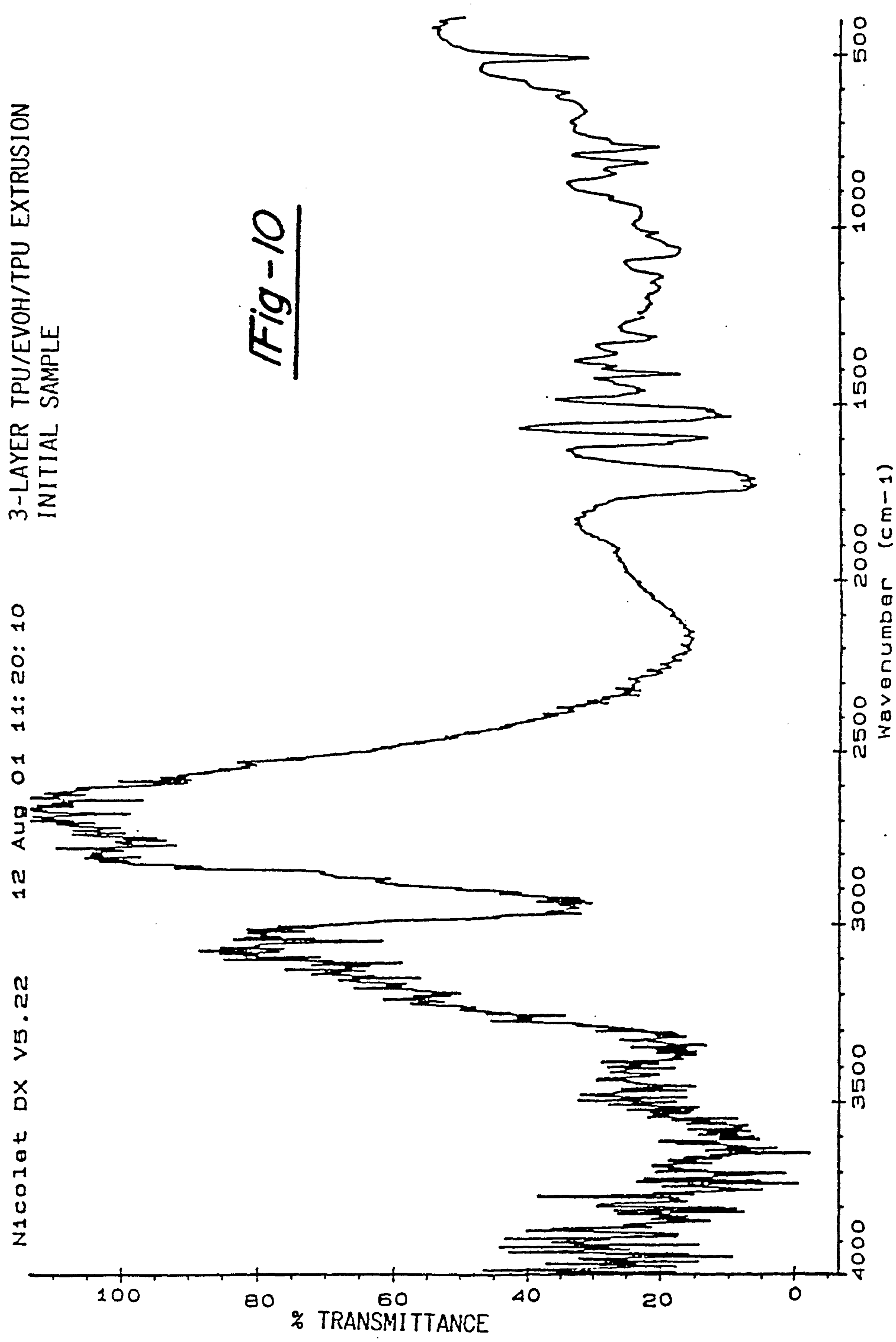
Nicolet DX V5.22 12 Aug 01 11:20:10
3-LAYER TPU/EVOH/TPU EXTRUSION
INITIAL SAMPLE
Fig-10
% TRANSMITTANCE
Wavenumber (cm-1)
100
80
60
40
20
0
4000
3500
3000
2500
2000
1500
1000
500

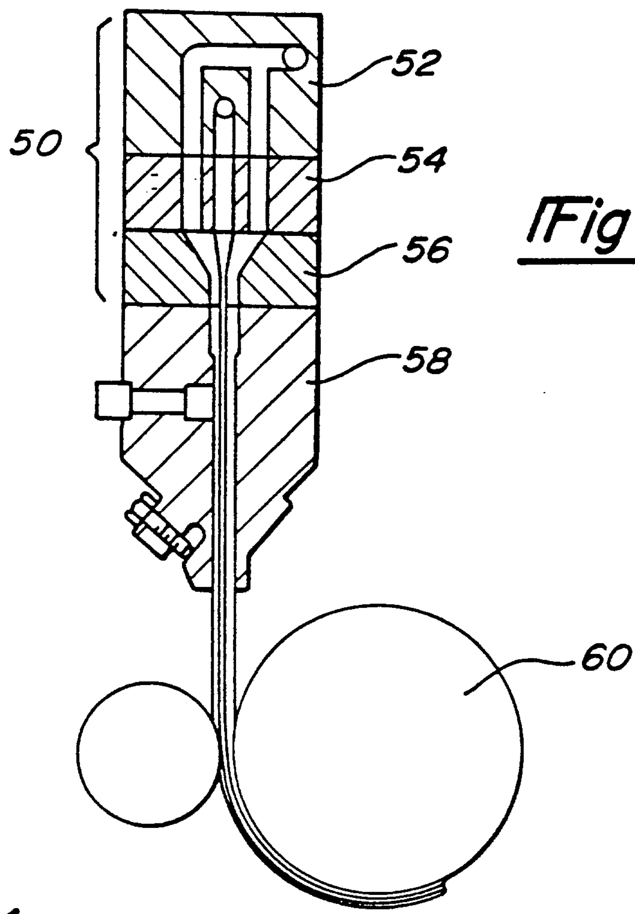


IFig - 11

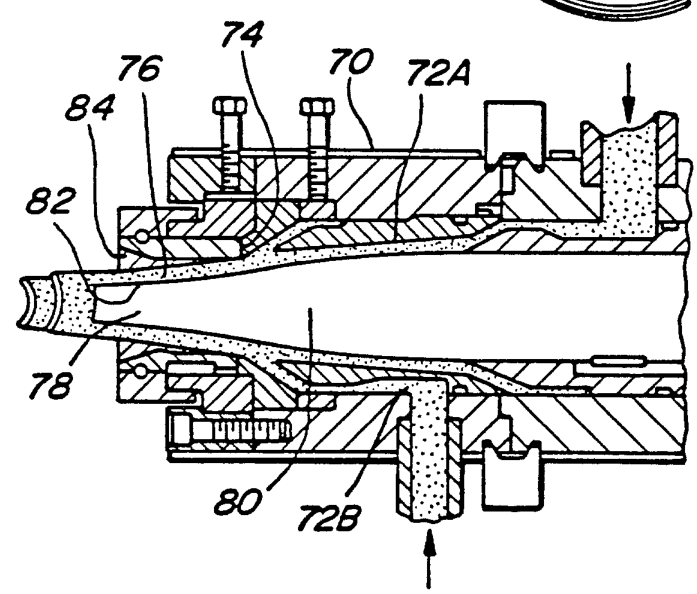


IFig - 13

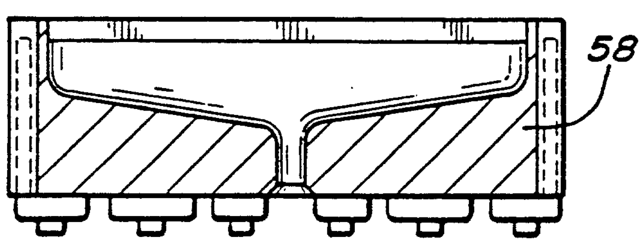


IFig - 12

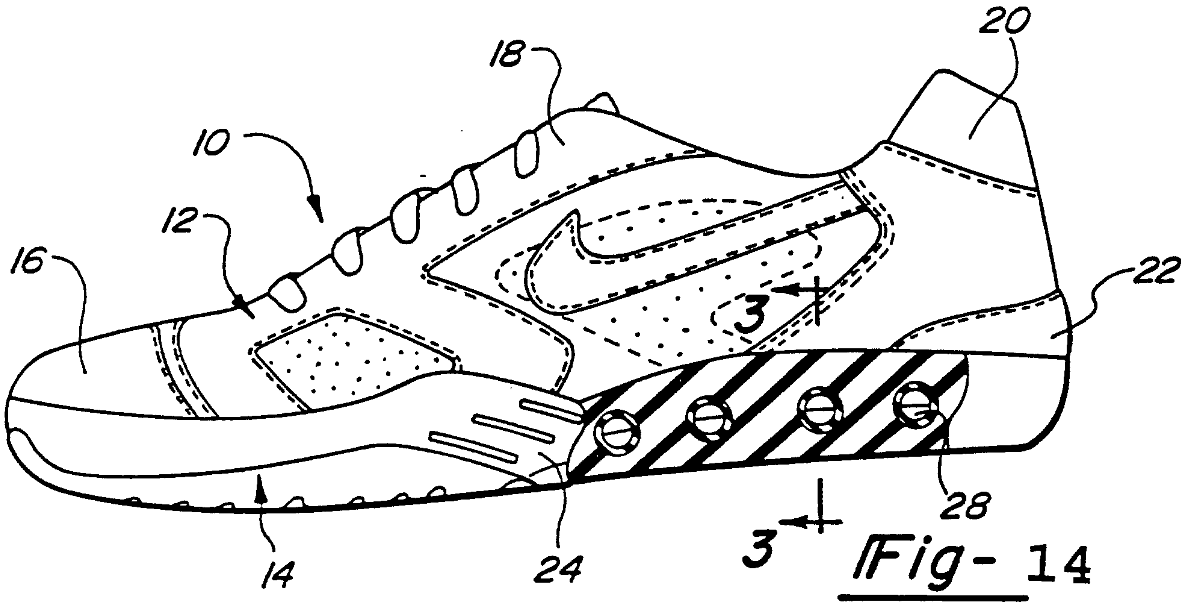


Fig- 14

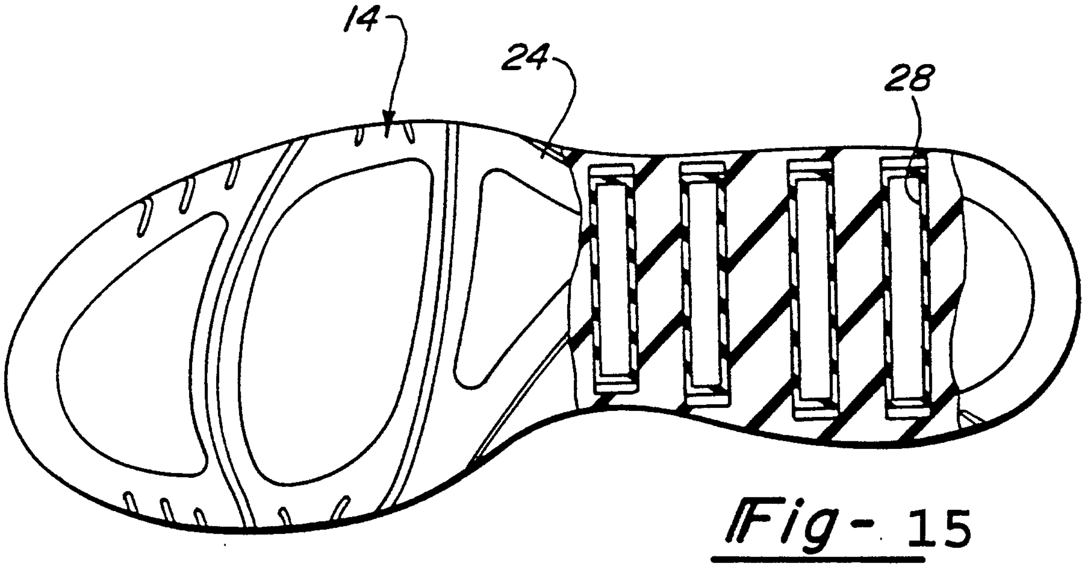


Fig- 15

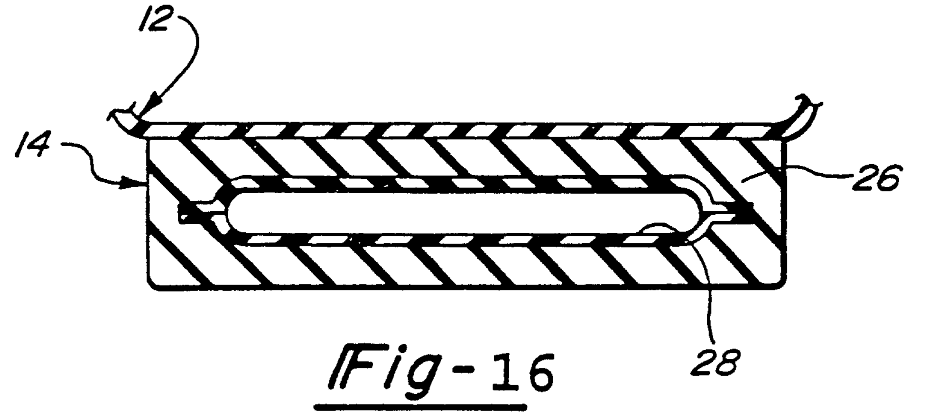


Fig-16

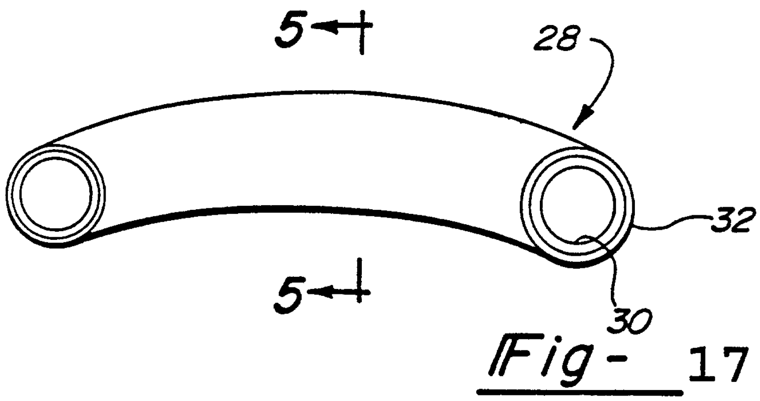

Fig- 17

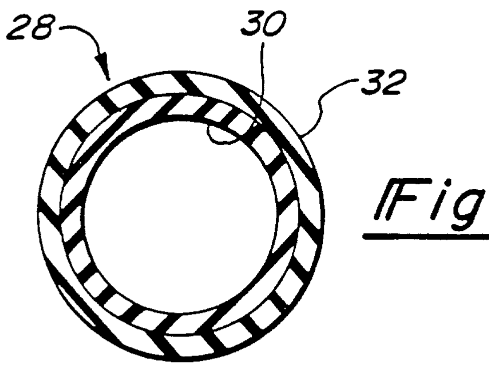

Fig- 18

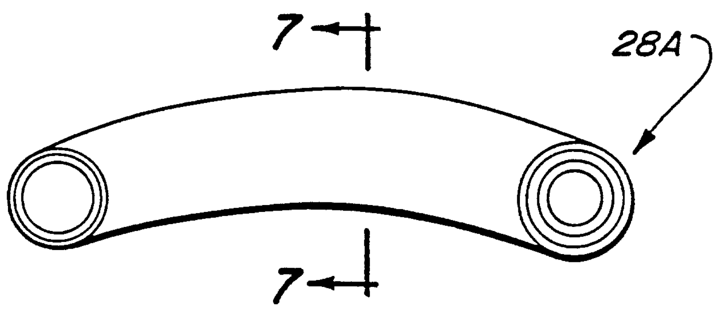

Fig- 19

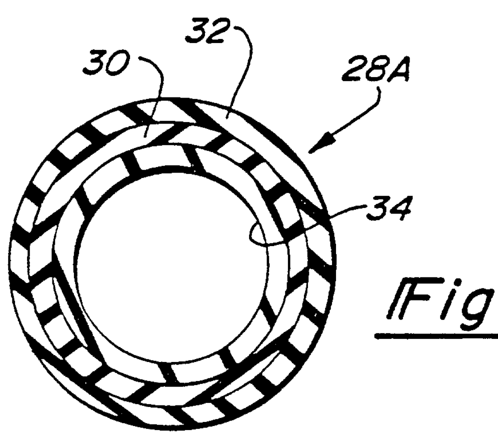

Fig-20

Fig- 21

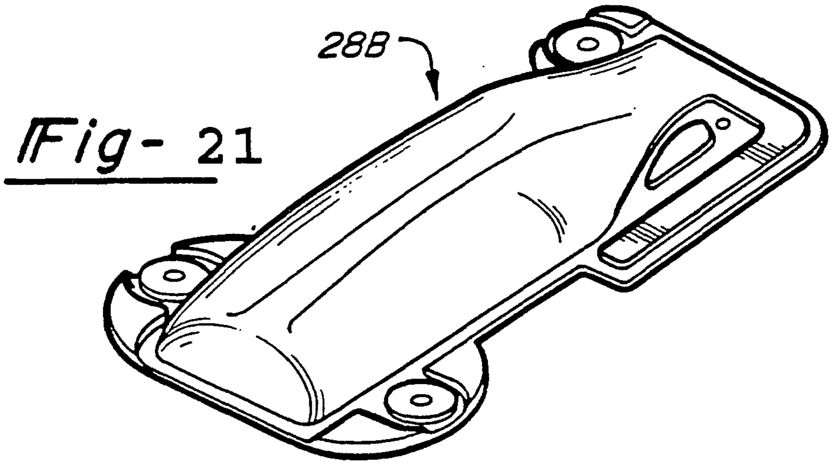


Fig-22

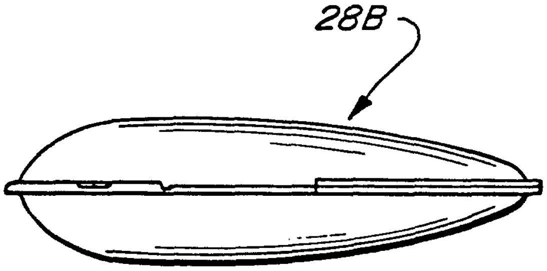


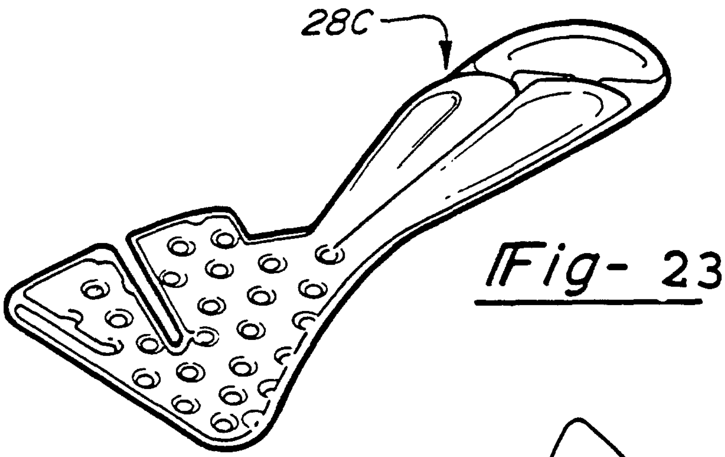


Fig- 23

Fig-24

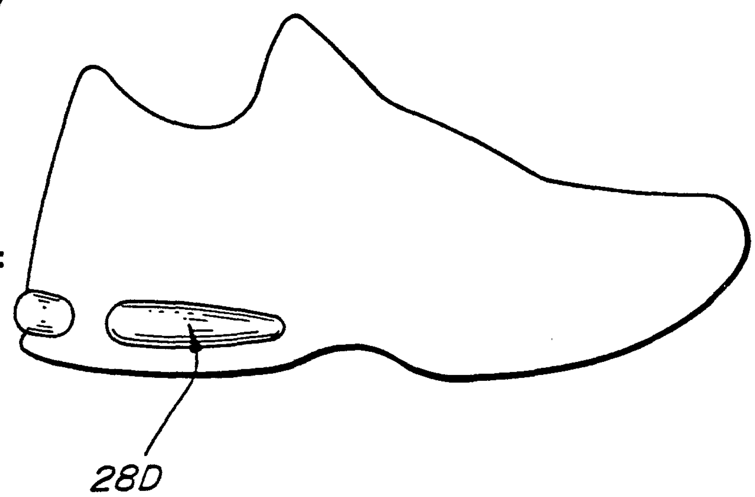

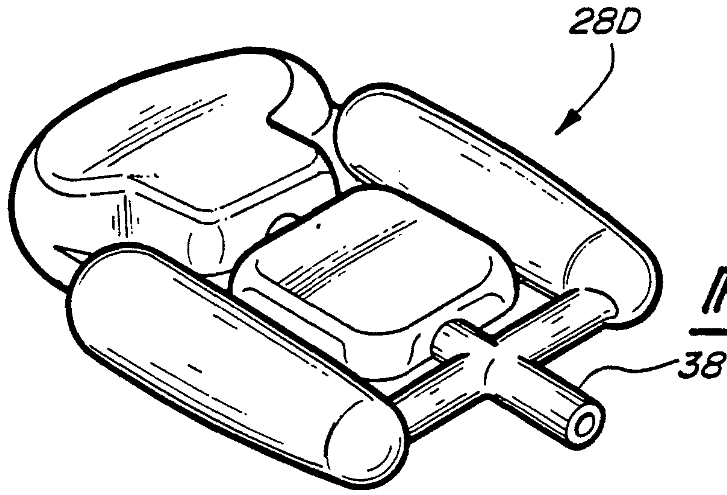


Fig-25

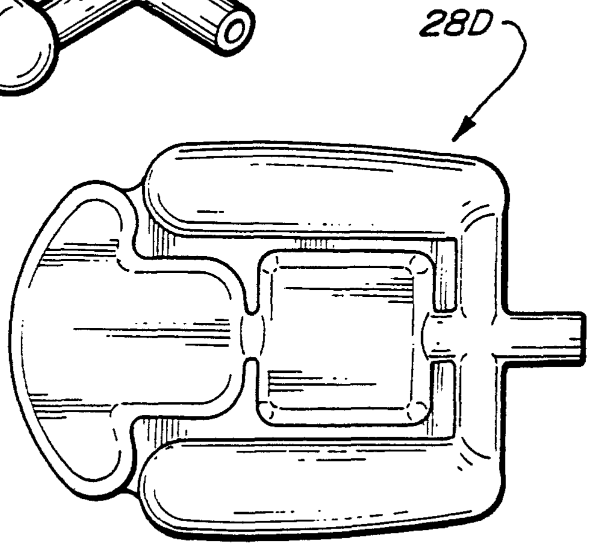


Fig-26

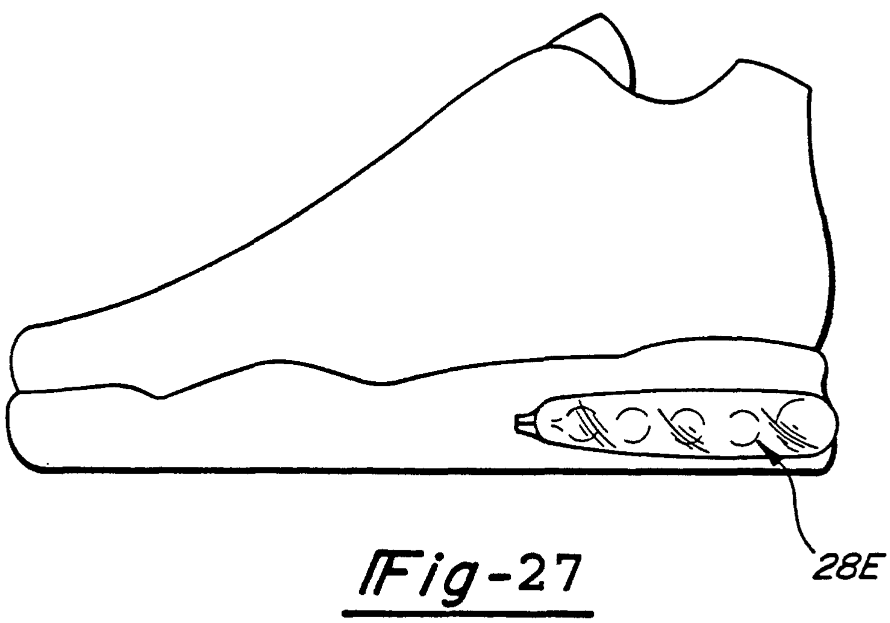


Fig-27

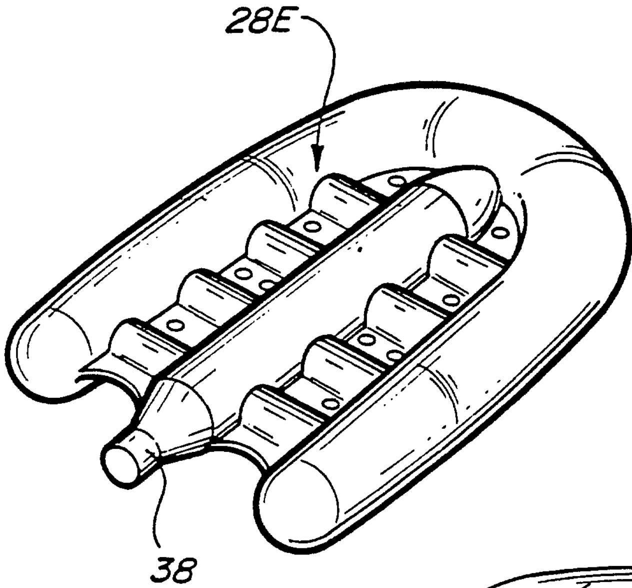


Fig- 28

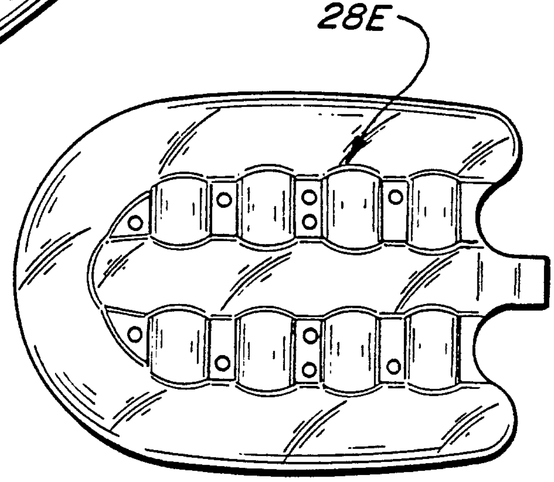


Fig-29

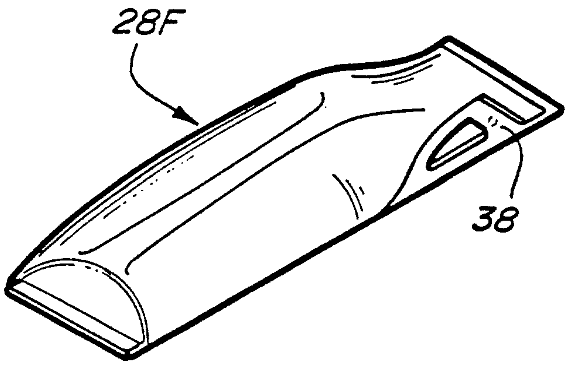


Fig- 30

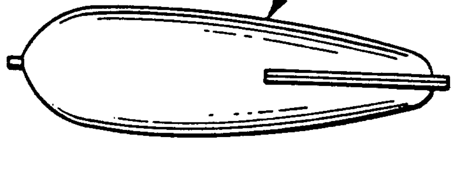


Fig-31

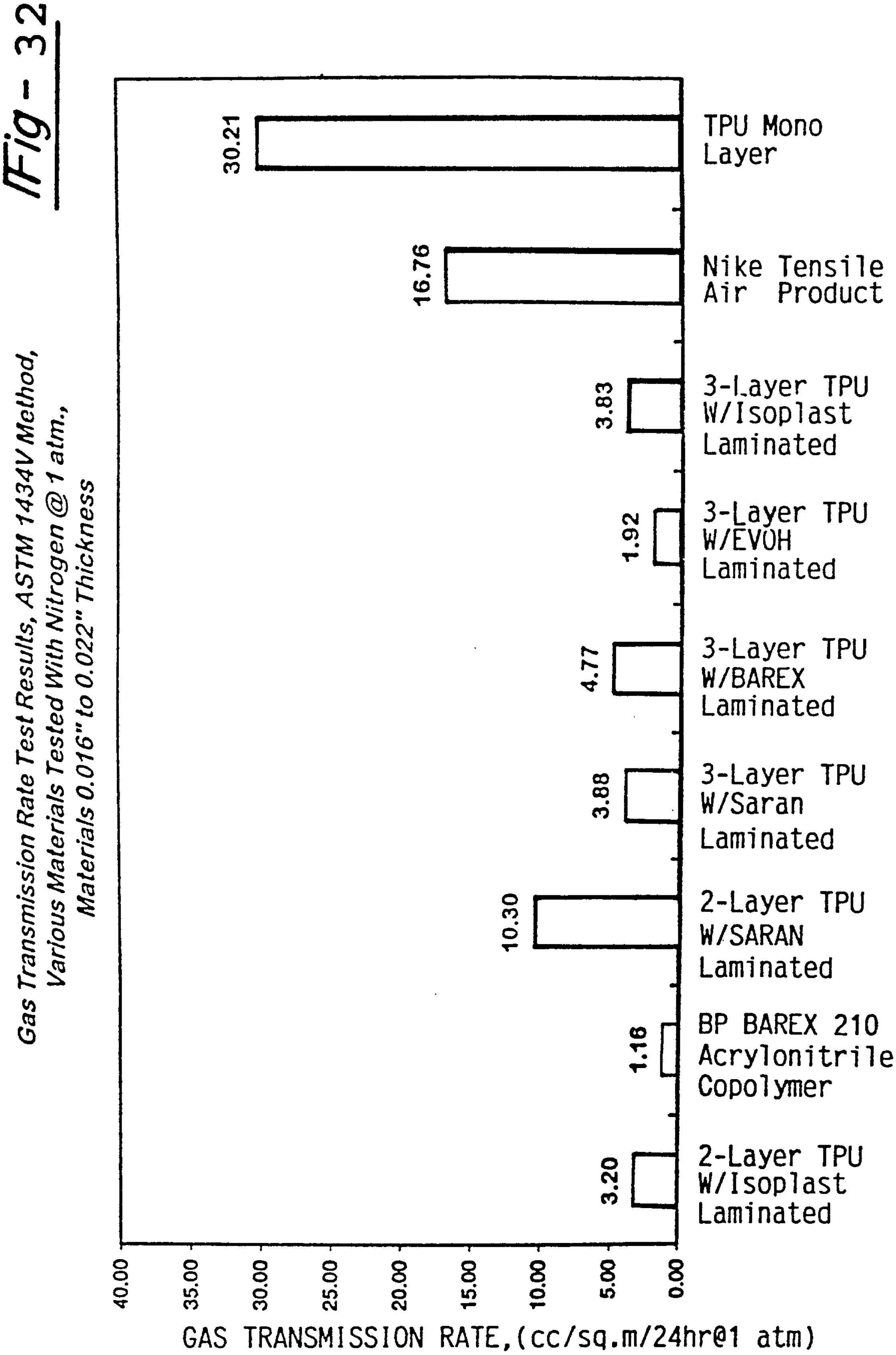
Gas Transmission Rate Test Results, ASTM 1434V Method,
Various Materials Tested With Nitrogen @ 1 atm.,
Materials 0.016" to 0.022" Thickness
30.21
TPU Mono Layer
16.76
Nike Tensile Air Product
3.83
3-Layer TPU W/Isoplast Laminated
1.92
3-Layer TPU W/EVOH Laminated
4.77
3-Layer TPU W/BAREX Laminated
3.88
3-Layer TPU W/Saran Laminated
10.30
2-Layer TPU W/SARAN Laminated
1.16
BP BAREX 210 Acrylonitrile Copolymer
3.20
2-Layer TPU W/Isoplast Laminated
40.00
35.00
30.00
25.00
20.00
15.00
10.00
5.00
0.00
GAS TRANSMISSION RATE,(cc/sq.m/24hr@1 atm)

Fig - 32